# EUROPEAN PATENT APPLICATION

(11) **EP 1 887 451 A2**
(43) Date of publication of application: **13.02.2008**
(21) Application number: 07022182.5
(22) Date of filing: 18.10.2001
(51) Int. Cl.: G06F 3/023, G06F 3/048

(54) **Data entry method and system for personal computer, and corresponding computer readable medium**

(30) Priority: 18.10.2000 CA 2323856; 21.05.2001 US 292648 P
(62) Divisional of application: 01981991.1
(71) Applicant: 602531 British Columbia Ltd., Vancouver, British Columbia V6B 4N7 (CA)
(72) Inventor: Dostie, Mark, Richmond, British Columbia V7E 4S5 (CA); Gunn, Harold David, Vancouver, British Columbia V6H 3P1 (CA); Hong, Jiang, Vancouver, British Columbia V6T 1N4 (CA); Knaven, Peter, North Vancouver, British Columbia V7J 3A1 (CA); Davis, William Trueman, Vancouver, British Columbia V6Z 2Y4 (CA)
(74) Representative: Samuels, Adrian James

(57) **Abstract**

In one aspect of the present invention a user can rapidly enter and search for data, such as text, using a data entry system by entering one or more characters on a digital keyboard with a pointing device. With the digital keyboard the user can create words, phrases and other character sequences. As the user enters a character sequence, a mechanism for character prediction visually informs the user of which set of characters on the digital keyboard are most likely to have the character that the user wishes to next enter as part of the text. In another aspect of the present invention, as the user forms a character sequence (partial text entry), the character sequence is used to search a dictionary for a set of completion candidates that begin with the character sequence. The data entry system retrieves completion candidates from the dictionary by determining which completion candidates in the dictionary are more likely to be the ones that the user is attempting to type. A rapid navigation system provides for enhanced navigation and retrieval of completion candidates from the dictionary.

## Description

### FIELD OF THE INVENTION

The present invention relates generally to computer-assisted data entry and more particularly to a method, system and media for entering data in a personal computing device.

### BACKGROUND OF THE INVENTION

The wide-spread adoption of miniaturized personal computing devices, such as hand-held devices and personal digital assistants (PDAs), has led to an increasing use of devices to send and receive text and data. One example of this trend is pen-based computing, wherein users enter text and commands into hand-held personal computers via a touch-sensitive screen. Examples of existing PDAs include the PalmPilot^{™} series, the Handspring^{™} series, Casio's Cassiopeia^{™}, Compaq's iPAQ^{™} series of Pocket PCs, the Jornada^{™} from Hewlett Packard and Symbol Technology's SPT series of hand-held devices. While such pen-based computing is popular, especially with the increasing power of miniature computing devices, it does present challenges to a user entering data in an application running on the hand-held device. For instance, many hand-held computers and personal digital assistants require that the user enter data according to a predetermined scripting style, such as with the PalmPilot^{™} series. Other hand-held devices provide a handwriting recognition system which requires that the computer learn the user's handwriting style. While such data entry mechanisms are useful, they can be difficult to use on their own to enter text with quickly.

Many pen-based computing systems, both large and small, offer the user the option to enter text using an on-screen digital keyboard. On-screen digital keyboards are typically miniaturized replica of conventional full-sized physical keyboards, such as QWERTY keyboards. Many on-screen keyboards have shown themselves to be less than efficient for entering text. When using a pointing device such as a pen, a user is typically required to enter text one character at a time by tapping out individual character selections from the on-screen keyboard. This "hunt-and-peck" method of typing with a single pointing device is time-consuming, especially when a user is entering large amounts of data.

Another common challenge when entering data into a personal computing device with a single pointing device such as a pen or stylus, and in particular when entering text, is that each letter making up the word or phrase must be entered manually. The longer the word or phrase, the greater the amount of manual entry required.

Text completion systems have been developed in an effort to assist users with text entry. In general, these systems predict and suggest a complete word completion based on a partial text entry entered by a user. These systems allow a user to type in the partial text entry and then accept a predicted text completion for the partial text entry. This avoids the keystrokes that would otherwise be required to type the complete text desired by a user. While such text completion systems provide some basic assistance for users to more rapidly enter text than would be required if every character of the desired text had to be typed in independently, there remains a need in the art for a more flexible text completion system for use with a single pointing device.

### SUMMARY OF THE INVENTION

The present invention provides an improved method, system and media for entering data in a personal computing device.

In accordance with one aspect of the present invention a user can rapidly enter and search for data, such as text, using a data entry system by entering one or more characters via a character entry system with a pointing device and by using a search list to dynamically obtain completion candidates.

Visual representations of the character entry system and the search list are displayed on a user interface. The data entry system enables the user to rapidly author data such as words, phrases, and other character sequences within documents or other computer files. As text (or more generally, data) is entered, it forms a partial text entry. In this specification "partial text entry" means a sequence of one or more characters making up a leading portion of a word or other character sequence.

When a character is entered using the character entry system, the entered character is added to the trailing end of the partial text entry. The partial text entry is used to search a dictionary of completion candidates for a set of completion candidates that begin with the partial text entry entered by the user. The data entry system retrieves completion candidates from the dictionary by determining which completion candidates in the dictionary are more likely to be the ones that the user is attempting to type. Completion candidates are retrieved from the dictionary on the basis of weight values (for example, preference values) stored in the dictionary for each completion candidate. Retrieved completion candidates are preferably displayed on the user interface in the search list.

In accordance with another aspect of the present invention, a rapid navigation system is provided for enhanced navigation and retrieval of completion candidates from the dictionary. The rapid navigation system enables a user to rapidly navigate through potential completion candidates within the dictionary that begin with a given partial text entry that the user has formed with the data entry system. Preferably, the rapid navigation system can be activated in a number of ways including, for instance, if the user enters a character using the character entry system and keeps the pointing device depressed for a predetermined period of time, or when a completion candidate is selected from the potential completion candidates displayed on the user interface.

In one aspect, the rapid navigation system contains a navigational object associated with the potential completion candidates displayed on the user interface. The navigational object serves as a visual guide identifying for the user which of the completion candidates displayed has been selected and whether or not a selected completion candidate, if any, is about to be used as the basis of a further search for a refined set (list) of potential completion candidates. Preferably, the navigational object contains a number of selection targets which are displayed on the user interface in an arc-like manner. Completion candidates are displayed in a search list also in an arc-like manner so as to notionally form a sloping line. The slope of the notional line formed from the display of completion candidates is configured so as to make it easy for the user to select completion candidates from the provided search list by gesturing up or down along a line similar to the arc of the search list.

Each completion candidate displayed in the search list has an associated selection target in the navigational object. Selection targets preferably include at least two display zones, a first display zone for indicating when the pointing device is located over a portion of the user interface associated with a particular completion candidate and a second display zone for indicating when that associated completion candidate has been selected and is about to be used as the basis for a further search of the dictionary for completion candidates.

In order to select a completion candidate, the user can move the pointing device to the associated selection target for the desired completion candidate within the search list or move the pointing device over the desired completion candidate itself. When the user pauses the pointing device over a completion candidate or a selection target associated with the completion candidate, the associated selection target is visually displayed in a different manner (for example, it is changed from white to green after a predetermined period of time indicating the selection of the associated completion candidate). If the completion candidate remains selected for a further period of time, then the associated completion candidate is selected to serve as the basis for a further search and a more refined list of completion candidates is retrieved and displayed in the search list. Preferably, the navigational object includes a dead zone within which the user can pause near the list of completion candidates without selecting one of the completion candidates. In one configuration, the selection targets are arranged around the dead zone so that the dead zone is substantially centrally located within the navigational object.

In another aspect of the present invention, a mechanism is provided for predicting a set of possible characters that a user is likely to next select from in order to further build upon an existing partial text entry. As a partial text entry is formed, the data entry system uses a dictionary of completion candidates to predict the set of possible characters that a user is likely to next select from. Preferably, the set of possible characters comprises a set of unique characters that are most likely to follow those characters already entered as part of the partial text entry. The set of possible characters are displayed in a distinguishing manner on the user interface for user selection. A character from the predicted set of next possible characters displayed on the user interface can be selected to be added to the partial text entry, and can also be used to activate the rapid navigation system.

In accordance with another aspect of the invention, a dictionary of completion candidates is preferably used to provide thematic information about the predicted set of next possible characters. The thematic information is preferably used to further characterize the display of the predicted set of next possible characters. This adds to the information visually conveyed to the user when such character prediction is used. Thematic information can provide the user with one or more characteristics associated with the predicted set of next possible characters. For instance, in one embodiment, the thematic information for a particular character in the set of unique characters represents the total number of potential completion candidates that are immediately available for display in a search list if that particular character is added to the end of the current partial text entry. Other types of thematic information may be provided. For instance, the thematic information for a particular character in the set of unique characters can represent the total number of potential completion candidates available, whether or not immediately displayable in the search list, if that particular character is added to the end of the current partial text entry. In another variation, the thematic information may provide the depth of search results available if the particular character in the set of unique characters is added to the current partial text entry. This latter variation can be used to visually notify the user that certain characters in the set of unique characters have many levels of search results available, while other such characters may have only one level of search results left for display in the search list. A variety of visual queues may be used to inform the user of certain characteristics associated with the predicted set of next possible characters including highlighting, bold, italics, underline, shadowing and the like. For instance, a range of colors may be used to display the predicted set of next possible characters, with different colors being used to distinguish between characters having different characteristics based on the thematic information.

In yet another aspect of the present invention, the rapid navigation system is used for rapidly navigating amongst a plurality of candidates. Such candidates may be completion candidates or other types of candidates that are selectable by the user.

In another aspect of the invention, there is provided a computer-implemented method of entering data for display on a user interface. With this method, a character entry system is displayed on the user interface. When a set of one or more characters is received making up a partial text entry selected via the user interface with a pointing device, a set of possible characters is predicted that a user is likely to next select from based on the set of one or more characters making up the partial text entry. The set of possible characters are displayed, for user selection, in a distinctive manner in relation to the character entry system.

In another aspect of the invention, there is provided a computer-implemented method of rapidly navigating amongst a plurality of candidates for user selection. A navigational object is displayed comprising a plurality of selection targets arranged in an arc-like manner on a user interface, each selection target being associated with one of the plurality of candidates for user selection. If one of the candidates is selected and has other candidates associated with it, the navigational object is redisplayed with the other candidates for user selection once the selected one of the candidates is selected for a predetermined period of time.

In another aspect of the invention, there is provided a computer-implemented system for rapidly navigating amongst a plurality of candidates. The system comprises a display region for displaying candidates for user selection; and a navigational object for navigating amongst the plurality of candidates, the navigational object comprising a plurality of selection targets arranged in an arc-like manner on a user interface, each selection target being associated with one of the plurality of candidates.

In accordance with another aspect of the present invention, there is provided a computer-implemented system for data entry comprising means for character entry, means for obtaining a set of completion candidates from a dictionary based on user character selection, means for displaying the set of completion candidates on a user interface, and means for rapidly navigating amongst displayed completion candidates for user selection comprising means for selecting any of the displayed completion candidates for entry into an electronic document or for advancing through to a more refined set of completion candidates based on a particular completion candidate from the displayed completion candidates.

Other aspects and features of the present invention will become apparent to those ordinarily skilled in the art upon review of the following description of specific embodiments of the invention in conjunction with the accompanying drawings.

### BRIEF DESCRIPTION OF THE DRAWINGS

In the accompanying drawings which illustrate embodiments of the invention,
- FIG. **1**: is a block diagram of a personal computing device loaded with a data entry system, according to a first embodiment of the invention;
- FIG. **2**: is a block diagram of the data entry system according to the first embodiment of the invention;
- FIG. **3**: is a diagram illustrating the display of a character entry system and search list on a user interface in accordance with the first embodiment of the present invention;
- FIG. **4**: is an illustration of a tree structure for the dictionary used in the first embodiment of the invention;
- FIG. **5**: is a block diagram of a data structure for a node in accordance with the present invention;
- FIG. **6**: is a block diagram of a data structure for traversing the candidate tree of the first embodiment in accordance with the present invention;
- FIG. **7**: is an illustration of the display of the rapid navigational system in accordance with the first embodiment of the present invention along with descriptive comments regarding components of the rapid navigational system;
- FIG. **8**: is another illustration of the display of the rapid navigation system for the first embodiment in accordance with the present invention with descriptive comments;
- FIGS. **9** and **10**: are flow diagrams illustrating the operation of a data entry system in accordance with the first embodiment of the present invention;
- FIG. **11**: is a flow diagram illustrating in further detail the operation of block **110** of FIG. **9;**
- FIG. **12**: is a flow diagram illustrating in further detail the operation of block **114 of FIG. 9;**
- FIG. **13**: is a flow diagram illustrating in further detail the operation of block **118** of FIG. **9;**

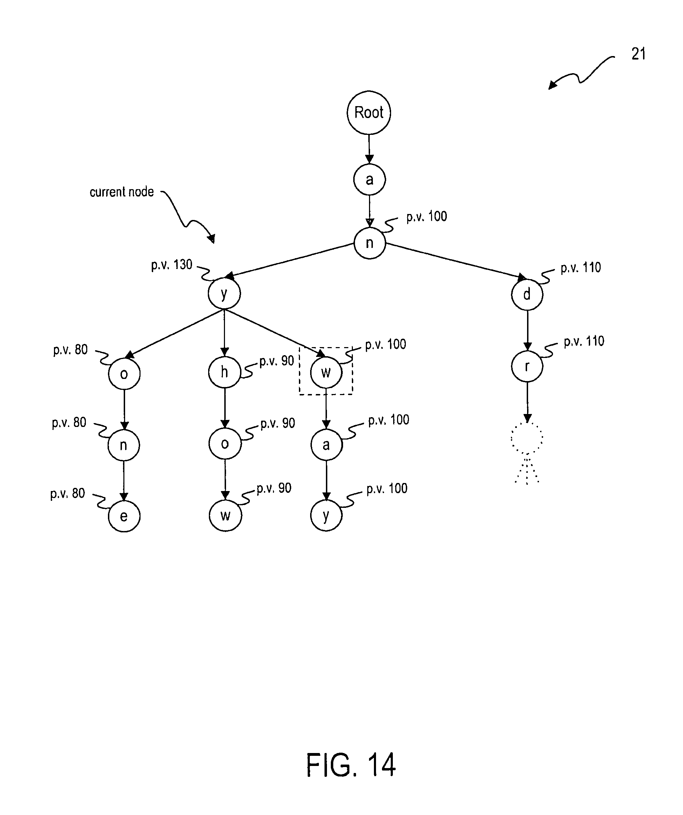

- FIG. **14**: is an illustration of a portion of the candidate tree in accordance with the first embodiment of the present invention;
- FIG. **15**: is a flow diagram illustrating the operation of block **252** of FIG. **13;**
- FIG. **16**: is a flow diagram illustrating an algorithm for performing a wide search or a deep search of a dictionary;
- FIG. **17**: is a flow diagram illustrating an algorithm for combining wide results sets and deep results sets for each active dictionary;
- FIG. **18**: is a flow diagram illustrating the overshoot algorithm for block **434** of FIG. **15;**
- FIG. **19**: is another illustration of a portion of the candidate tree for the first embodiment;
- FIG. **20**: is a flow diagram illustrating the operation of the "undo" command for the first embodiment;
- FIG. **21**: is a block diagram illustrating nodes for a compact node structure in accordance with another embodiment of the present invention;
- FIG. **22**: is a diagram illustrating an alternative tree structure for a dictionary in accordance with the present invention;
- FIG. **23**: is a screen shot illustrating a character entry system with a question asking the user whether an unrecognized partial text entry should be added to the user's personal dictionary;
- FIG. **24**: is a screen shot illustrating a character entry system with a question asking the user whether a selected completion candidate should be removed to the user's personal dictionary;
- FIG. **25**: is a block diagram illustrating the organization of candidates using buckets in accordance with the present invention;
- FIG. **26**: is a screen shot illustrating a dictionary management screen on which a user can active and deactivate available dictionaries;
- FIG. **27**: is a block diagram of the data entry system according to an alternative embodiment of the invention;
- FIG. **28**: is a flow diagram illustrating an alternative operation of block **252** of FIG. **13,** according to an alternative embodiment of the invention;
- FIG. **29**: is a diagram illustrating the display of a character entry system and search list on a user interface in accordance with another embodiment of the present invention; and
- FIG. **30**: is an alternative flow diagram to FIG. **9** modified to illustrate the operation of a data entry system in accordance with the embodiment in FIG. **29** of the present invention.

### DETAILED DESCRIPTION

Reference will now be made in detail to implementations and embodiments of the invention, examples of which are illustrated in the accompanying drawings.

### Introduction

In one aspect of the present invention a user can rapidly enter and search for data, such as text, using a data entry system by entering one or more characters on a via a character entry system with a pointing device and by using a search list to dynamically obtain completion candidates. Visual representations of the character entry system and the search list are displayed on a user interface. The data entry system enables the user to rapidly author data such as words, phrases, and other character sequences within documents or other computer files. As data is entered, it forms a partial text entry. In this specification "partial text entry" means a sequence of one or more characters making up a leading portion of a word or other character sequence.

When a character is entered via the character entry system, the entered character is added to the trailing end of the partial text entry. The partial text entry is used to search a dictionary for a set of completion candidates that begin with the partial text entry entered by the user. Each completion candidate stored in the dictionary represents a word, a phrase, an abbreviation, a phone number, a formula, or a character sequence according to a particular language. Completion candidates are retrieved from the dictionary by determining which set of completion candidates in the dictionary are more likely to have the completion candidate that the user is attempting to type. Completion candidates are retrieved from the dictionary on the basis of weight values (for example, preference values) stored in the dictionary for each completion candidate. Retrieved completion candidates are preferably displayed on the user interface in the search list.

The character entry system can be one of several types of entry systems. In one embodiment, the character entry system provides a digital keyboard for character entry. In another embodiment, the character entry system is a hand-writing recognition system. In another embodiment, the character entry system is a script-based recognition system such as Jot^{™} or Palm's Graffiti^{™}. Combining the script-based recognition system or the hand-writing recognition system with the capability of the data entry system to search for and retrieve potential completion candidates, the user can enter desired characters from the character entry system without having to potentially change keyboard displays in search of a desired character or symbol. When a digital keyboard is used, the user may need to change keyboard layouts or pull up a further keyboard display in search of a desired key due to a finite amount of display space. However, the digital keyboard allows the user to easily choose and enter desired characters without having to recall a predefined script or adhere to a hand-writing style. Thus, in general, novice users can more quickly learn to use the search list of completion candidates with the digital keyboard to rapidly generate words, phrases and other character sequences. On the other hand, users comfortable with using a predefined script such as Graffiti^{™} or a hand-writing recognition character entry system can take advantage of these forms of character entry in combination with using the search list of completion candidates to rapidly generate words, phrases and other character sequences.

From the search list, the user can select one of the completion candidates displayed and use the selected completion candidate to complete the partial text entry which the user is currently entering. Alternatively, the user can use one of the completion candidates in the search list to initiate a further automated search to obtain a more refined list of completion candidates from the dictionary. In this latter case, a completion candidate selected from the search list is used to obtain a list of completion candidates which is then displayed in an updated search list. Thus, the data entry system supports multi-level search lists which the user can use to navigate through completion candidates to a desired completion candidate. The user may also return to keyboard entry at any time.

In another aspect, a rapid navigation system is provided for enhanced navigation and retrieval of completion candidates from the dictionary. The rapid navigation system enables the user to rapidly navigate through one or more sets (lists) of completion candidates within the dictionary that begin with a given partial text entry which the user has formed with the data entry system. Preferably, the rapid navigation system can be activated in a number of ways including, for instance, if the user enters a character using the character entry system and keeps the pointing device depressed for a predetermined period of time, or when a completion candidate is selected from the potential completion candidates displayed on the user interface.

With the potential completion candidates displayed on the user interface in the search list, the user can use the rapid navigation system to select any of the potential completion candidates for entry into the text that is being authored. The user can also use the rapid navigation system to advance through to a more refined list of completion candidates based on a particular completion candidate from the displayed search list.

In another aspect, the rapid navigation system contains a navigational object associated with the potential completion candidates displayed on the user interface. The navigational object serves as a visual guide identifying for the user which of the completion candidates displayed in the search list has been selected and whether or not a selected completion candidate, if any, is about to be used as the basis of a further search for a refined set (list) of potential completion candidates. Preferably, the navigational object contains a number of selection targets which are displayed on the user interface in an arc-like manner. Completion candidates are preferably displayed in a search list also in an arc-like manner so as to notionally form a sloping line. The slope of the notional line formed from the display of completion candidates is configured so as to make it easy for the user to select completion candidates from the provided search list by gesturing up or down along a line similar to the arc of the search list.

Configuring the navigational object and the search list in an arc-like manner provides for more rapid navigation and selection of completion candidates. In addition, this configuration helps minimize the amount of screen space used by the rapid navigation system without requiring the user to move the pointing device horizontally from side to side on the user interface.

Each completion candidate displayed in the search list has an associated selection target in the navigational object. Selection targets preferably include at least two display zones, a first display zone for indicating when the pointing device is located over a portion of the user interface associated with a particular completion candidate and a second display zone for indicating when that associated completion candidate has been selected and is about to be used as the basis for a further search of the dictionary for completion candidates.

In order to select a completion candidate, the user can move the pointing device to the associated selection target for the desired completion candidate within the search list or move the pointing device over the desired completion candidate itself. When the user pauses the pointing device over a completion candidate or a selection target associated with the completion candidate, the associated selection target is visually displayed in a different manner (for example, it is changed from white to green after a predetermined period of time indicating the selection of the associated completion candidate). If the completion candidate remains selected for a further period of time, then the associated completion candidate is selected to serve as the basis for a further search and a more refined list of completion candidates is retrieved and displayed in the search list. Preferably, the navigational object includes a "dead zone" within which the user can pause near the list of completion candidates without selecting one of the completion candidates. In one configuration, the selection targets are arranged around the dead zone so that the dead zone is substantially centrally located within the navigational object.

In another aspect of the present invention, a mechanism is provided for predicting a set (or list) of possible characters that a user is likely to next select from in order to further build upon an existing partial text entry (also referred to herein as a "predicted set of next possible characters" and as a "predicted set of possible characters"). As a partial text entry is formed, the data entry system uses a dictionary of completion candidates (or multiple dictionaries) to predict the set of possible characters that a user is likely to next select from. Preferably, the set of possible characters contains a set of unique characters that are most likely to follow those characters already entered as part of the partial text entry. The set of possible characters are displayed in a distinguishing manner on the user interface for user selection. For example, in one embodiment the set of possible characters are displayed in a character list from which any of the displayed characters can be selected. In another embodiment, the set of possible characters are displayed in a distinguishing manner within a digital keyboard layout. The set of possible characters can also be hi-lighted or emphasized using another visual queuing scheme. A character from the predicted set of next possible characters can be selected to be added to the partial text entry, and can also be used to activate the rapid navigation system.

In accordance with another aspect of the invention, a dictionary of completion candidates is preferably used to provide thematic information about the predicted set of next possible characters. The thematic information is used to further characterize the display of the predicted set of next possible characters. This adds to the information visually conveyed to the user when such character prediction is used. Thematic information can provide the user with one or more characteristics associated with the predicted set of next possible characters. For instance, in one embodiment, the thematic information for a particular character in the set of unique characters represents the total number of potential completion candidates that are immediately available for display in a search list if that particular character is added to the end of the current partial text entry. Other types of thematic information may be provided. For instance, the thematic information for a particular character in the set of unique characters can represent the total number of potential completion candidates available, whether or not immediately displayable in the search list, if that particular character is added to the end of the current partial text entry. In another variation, the thematic information may provide the depth of search results available if the particular character in the set of unique characters is added to the current partial text entry. This latter variation can be used to visually notify the user that certain characters in the set of unique characters have many levels of search results available, while other such characters may have only one level of search results left for display in the search list. A variety of visual queues may be used to inform the user of certain characteristics associated with the predicted set of next possible characters including highlighting, bold, italics, underline, shadowing and the like. For instance, a range of colors may be used to display the predicted set of next possible characters, with different colors being used to distinguish between characters having different characteristics based on the thematic information.

### Operating Environment

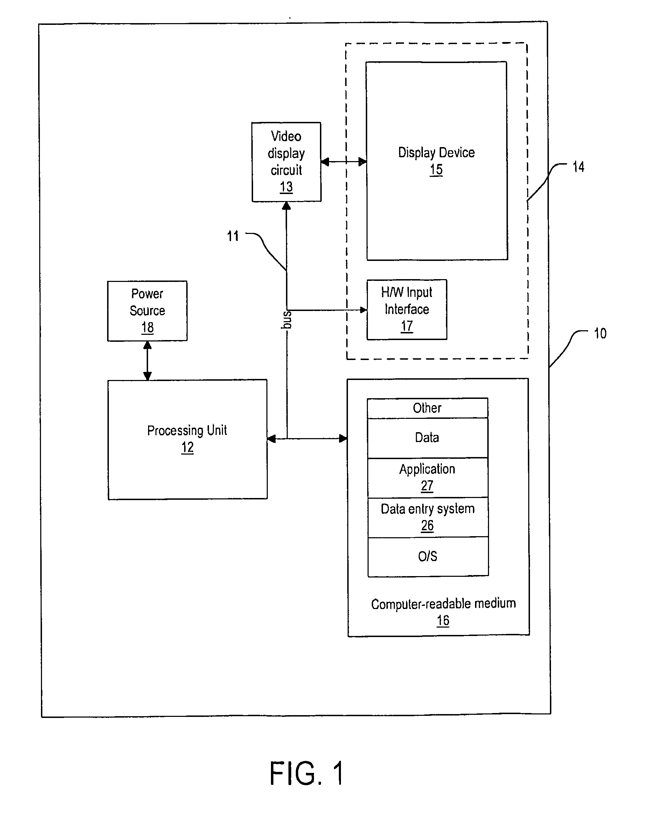

FIG. **1** shows a block diagram of a personal computing device **10** for text and data entry according to a first embodiment of the invention. The personal computing device **10** shown in FIG. **1** has at least one processing unit **12** (for example, a CPU) connected by a bus **11** to a computer-readable medium **16.** The computer-readable medium **16** provides a memory store for software and data residing within the personal computing device **10.** The computer-readable medium **16** can include one or more types of computer-readable media including volatile memory such as Random Access Memory (RAM), and nonvolatile memory, such as a hard disk or Read Only Memory (ROM). In the first embodiment, computer-readable medium **16** comprises memory made up of RAM and ROM which are used to store an operating system, a data entry system **26,** and an application **27** receptive to user-based text entry such as a word processor. Other applications may also be stored in memory such as a browser or micro-browser, an e-mail application, or other end-user applications.

The operating system can be any of several well-known operating systems depending on the personal computing device used. For example, for hand-held devices, the operating system can be PalmOS^{™}, Windows CE^{™}, EPOC^{™}, or an equivalent operating system. For larger systems, such as with work stations or desktop computers, a more robust operating system may be used such as, for example, Windows **95**^{™}, Windows **98**^{™}, Windows NT^{™}, Windows **2000**^{™}, MacOS^{™}, UNIX, Linux or the like. For the purposes of the first embodiment, the operating system is Windows CE^{™}.

In the first embodiment, the data entry system **26** contains software components that run on the processing unit **12** to support computer-assisted data generation and entry for the user. However, in other alternatives the data entry system **26** components can be implemented as computer-readable instructions in firmware or embedded in hardware components. In the first embodiment, electronic text and documents are generated and maintained by the application **27** and the user authors and edits the electronic text and documents with the data entry system **26** which communicates with the application **27** through an application programming interface (API). This allows the data entry system **26** to be portable so that it can be used by one or more applications to accept text and data entry from the user. In an alternative, the data entry system **26** may be integrated into part of an application.

The personal computing device **10** is powered by an internal battery power source **18,** although an external power source may be used.

The personal computing device **10** includes a graphical display device **15** and a hardware input interface **17** receptive to user input from a pointing device. In this specification, the term "pointing device" means an input device that allows a user to select one choice amongst one or many choices (a user-based selection). Some pointing devices enable a user to make user-based selections by pointing to a desired choice and include, by way of example, a pen, stylus, or finger. More generally, pointing devices capable of supporting user-based selections include, by way of example, the pointing devices above capable of pointing, as well as other input devices such as a mouse, trackball or the like.

The graphical display device **15** is connected to and controlled by the processing unit **12** via a video display circuit **13.** The graphical display device **15** may be a CRT, a liquid crystal display, or an equivalent computer display.

In the first embodiment, the personal computing device **10** is a personal digital assistant (by way of example, the iPAQ^{™} H36xx series) wherein the graphical display device **15** and the hardware input interface **17** are combined in the form of a touch-sensitive screen **14.** Touch-sensitive screens are well known in the art. The touch-sensitive screen **14** serves as a graphical display and as an input interface receptive to generating co-ordinate position signals in response to contact from a pointing device such as a pen or stylus. It will be appreciated by those skilled in the art that the personal computing device **10** is represented in the following discussion as a personal digital assistant for illustration purposes. The present invention may be practised with other personal computing devices including other hand-held devices, personal computers and other microprocessor-based electronic devices, mobile telephones, internet appliances, and embedded devices, having a suitable graphical display and an input interface receptive to user input via a pen, stylus, finger, mouse, or an equivalent pointing device that allows the user to select one choice from many. Other types of equivalent personal computing devices to which the features and aspects of the present invention are applicable include, by way of example, an internet appliance controlled via a remote control (for instance, running an Internet service through a television via a set top box and a remote control). In alternative embodiments, the hardware input interface **17** may be a digitising tablet, a pressure-sensitive input surface or a proximity sensing input surface. It will also be appreciated from this specification that aspects of the present invention can be stored as computer-readable instructions on one or more types of computer-readable media including, but not limited to, flash memory, smart media, a floppy disk, CD-ROM, CD-R, CD-RW, DVD, an optical disk, a mini-disk, a hard disk drive, a network drive, a micro-drive, a Syquest^{™} disk, a ZIP^{™} disk or the like.

In the first embodiment, the user interfaces with the personal computing device **10** via the touch-sensitive screen **14** using a pen as a pointing device. However, it should be noted that in alternative embodiments, various other pointing devices can be used, such as a stylus, finger, track ball, or mouse. If a mouse or an equivalent pointing device is used in place of a pen, stylus, or finger, then for the first embodiment the act of depressing a mouse button should be considered equivalent to touching the touch-sensitive screen **14** or touch pad with a stylus, pen, or finger. Similarly, releasing a depressed mouse button should be considered equivalent to lifting the stylus, pen, finger or other pointing device from the touch-sensitive screen **14** (or a touch pad or pressure sensitive pad).

### Data Entry System

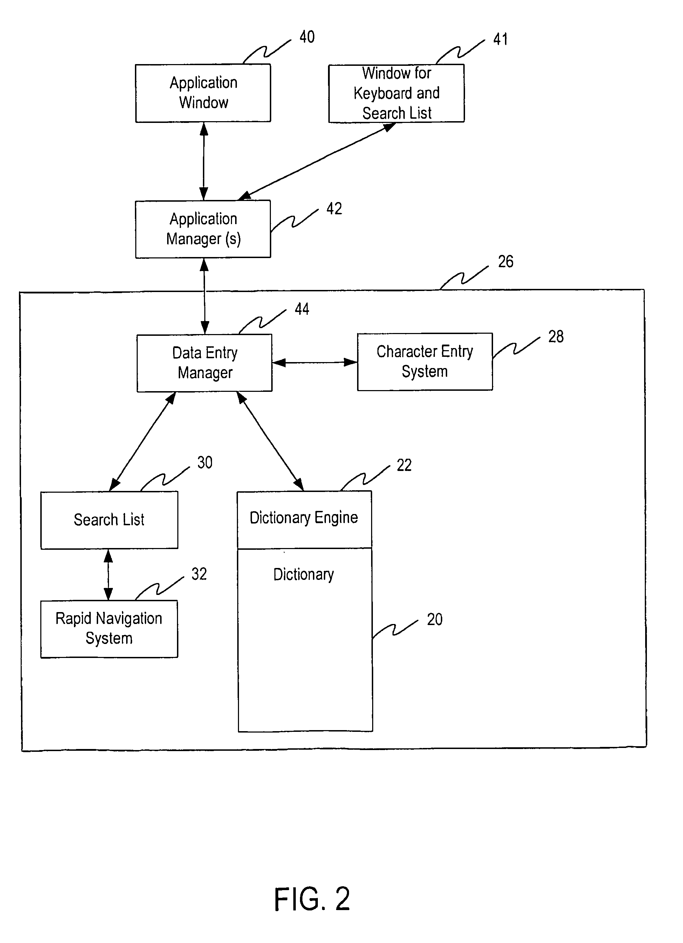

Referring to FIG. **2,** in the first embodiment the data entry system **26** includes a dictionary **20,** a dictionary engine **22,** a character entry system **28,** a search list **30,** and a rapid navigation system **32.** The character entry system **28** provides an interface for the user to enter text and data into the personal computing device **10** (FIG. **1**). As the user enters in characters via a visual representation of the character entry system **28,** the characters entered by the user form a partial text entry. The partial text entry is used by the dictionary engine **22** to search the dictionary **20** for completion candidates that begin with the sequence of characters making up the partial text entry. Completion candidates retrieved from the dictionary **20** are displayed in a visual representation of the search list **30** for user selection. The user can also use the rapid navigation system **32** to rapidly traverse and select from potential completion candidates within the dictionary **20.**

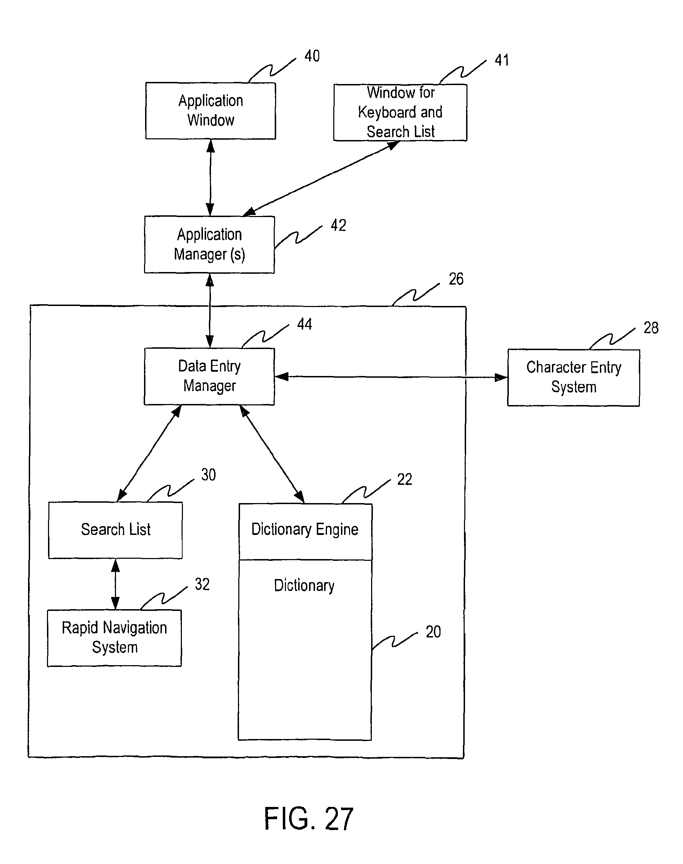

An application manager **42** sends and receives data to and from a window **(40, 41)** within application **27.** A plurality of windows are used to display the visual representations of the character entry system **28,** the search list **30** and the text and data that a user is creating or manipulating. Windows and application managers are well known in the art. User input received via window **41** is relayed by the application manager **42** to a data entry manager **44** within the data entry system **26.** The data entry manager **44** represents a component of the data entry system **26** that is programmed to manage the flow of information between the application manager **42** and the other components of the data entry system **26.** The data entry manager **44** also serves as an interface for the flow of information between the character entry system **28,** the search list **30** and the dictionary engine **22.** It will be appreciated that other configurations for managing the operation of the character entry system **28,** the search list **30** and the dictionary **20** and dictionary engine **22** may be used in place of the configuration shown in FIG. **2** and are considered equivalent. For example, the role of the data entry manager **44** may be allocated to the character entry system **28** or to another component of the data entry system **26.** As well, in another variation the character entry system **28** may be separate from the data entry system **26** and communicate with the data entry system **26** via an API (for example, see FIG. **27**).

### Character Entry System

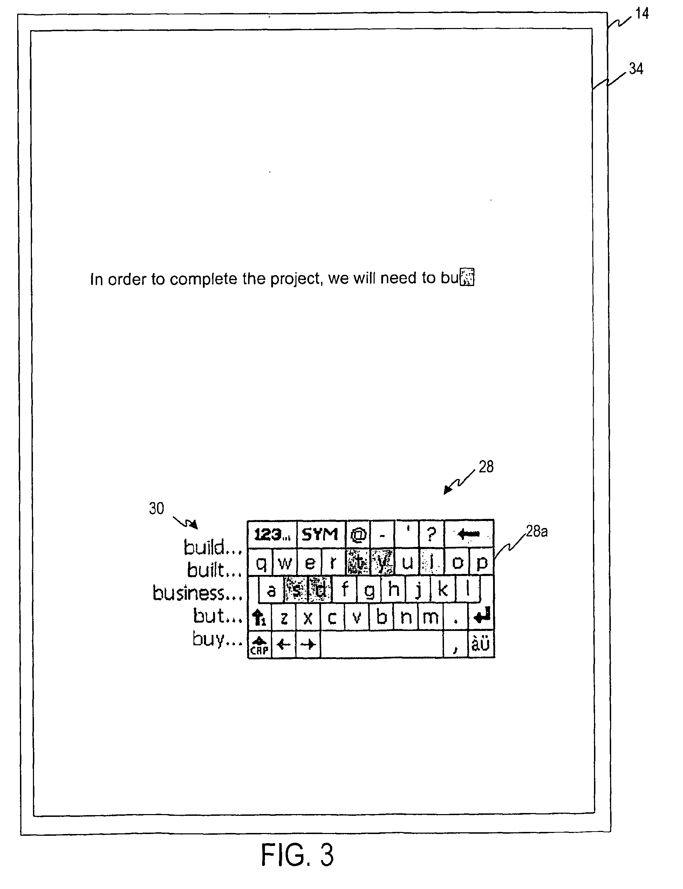

Referring to FIG. **3,** a visual representation (i.e. an image) of the character entry system **28** and the search list **30** are displayed on a graphical user interface **34** within the screen area of the touch-sensitive screen **14.** A user enters text (or other data) using the character entry system **28** and the search list **30.** As text is entered, a partial text entry is formed. Initially, a partial text entry is formed using the character entry system **28.** Once at least one character is entered using the character entry system **28,** the user can use the character entry system **28** and the search list **30** to more rapidly and flexibly enter text. The user can also use automated features of the data entry system **26** (FIG. **2**) such as the search list **30** and the rapid navigation system **32** to assist with the automated prediction and completion of a partial text entry. For example, the user can then use the combination of the search list **30** and the character entry system **28,** or use either the search list **30** or the character entry system **28** individually, to further define the partial text entry and to rapidly enter text. The partial text entry is stored by the data entry system **26** and represents the beginning of a desired completion candidate.

In the first embodiment, the character entry system **28** is a digital keyboard **28a** containing a plurality of keys each of which is associated with at least one character from a set of characters. For example, when the English alphabet or a character set containing the English alphabet is used, each key on the digital keyboard **28a** can contain one or more letters from the English alphabet. It should be noted that reference to the English alphabet is by way of example only, and that the digital keyboard **28a** can be configured in the alternative to support any set of characters which the user may then select and use to enter text into the personal computing device **10.** The terms "character set" and "set of characters" refer in this specification to a set containing a plurality of letters, numbers and/or other typographic symbols. Examples of character sets include, but are not limited to, one or more alphabets of a written language (for example, English, French, German, Spanish, Italian, Chinese, or Japanese), and binary-coded character sets such as ASCII (American Standard Code for Information Interchange), EBCDIC (Extended Binary Coded Decimal Interexchange Code), BCD (Binary Coded Decimal), and Unicode.

In the first embodiment, the digital keyboard **28a** displays digital keys containing characters from the English alphabet along with special characters selected from the ASCII character set. Preferably. the digital keyboard **28a** can also be used to display European symbols and numerical symbols. The digital keyboard **28a** uses a rectangular design in the first embodiment, although other keyboard designs may be used including, for example, a circular design or an elliptical design.

Referring to FIG. **2** and **3,** when the user begins entering a word or character sequence via the touch screen **14** using the digital keyboard **28a,** the data entry system **26** automatically begins searching the dictionary **20** for completion candidates that the user may be attempting to enter. As characters are entered by the user, they are added to the partial text entry which is used by the dictionary engine **22** to build a search path within the dictionary **20.** The search path is used to retrieve a set of potential completion candidates for display in the visual representation of the search list **30** on a user interface.

The dictionary engine **22** notifies the search list **30** of the retrieved completion candidates. The search list **30** takes the retrieved completion candidates and redraws itself with the retrieved completion candidates.

### Dictionary

The dictionary **20** contains completion candidates with preference values (or weight or frequency values) for ranking completion candidates relative to each other. In the first embodiment, preference values are predetermined from analyzing a large corpus of text. However, preference values may be dynamically generated or modified on the basis of a specific user's usage of words, phrases, and/or character sequences through the data entry system **26.**

Each completion candidate stored in the dictionary **20** represents a word, a phrase, an abbreviation, a phone number, a formula, or another character sequence. Character sequences can include, but are not limited to, "chunks" such as word chunks. A chunk represents a completion candidate that also serves as a beginning sequence of characters for one or more other completion candidates. Chunks provide a way of organizing the display and retrieval of completion candidates. A chunk can be a prefix or root to other completion candidates. For example, "every" is a word chunk for other completion candidates such as "everyday", "everywhere", and "everyone". A chunk can also be a character sequence, other than a prefix or root, that forms the beginning character sequence for several completion candidates in a target language. For instance, the character sequence "investig" may be used as a chunk to form the beginning of several other completion candidates including "investigate", "investigating", "investigation", "investigates", "investigated" and "investigative".

Chunks are shown in the search list **30** as completion candidates with a "..." following them, indicating that the dictionary **20** contains one or more further completion candidates that begin with the chunk. Other visual indicators, such as highlighting, colors, underlining, italics, icons or the like, may be used to identify completion candidates which are chunks and are considered equivalent. By visually identifying which completion candidates in the search list **30** serve as chunks to other completion candidates, the data entry system **26** provides the user with an indicator of when a completion candidate in the search list **30** can be used to retrieve further completion candidates. By selecting and pausing briefly on a chunk displayed in the search list **30**, the user can quickly call up and choose from a refined list of completion candidates that begin with the selected chunk.

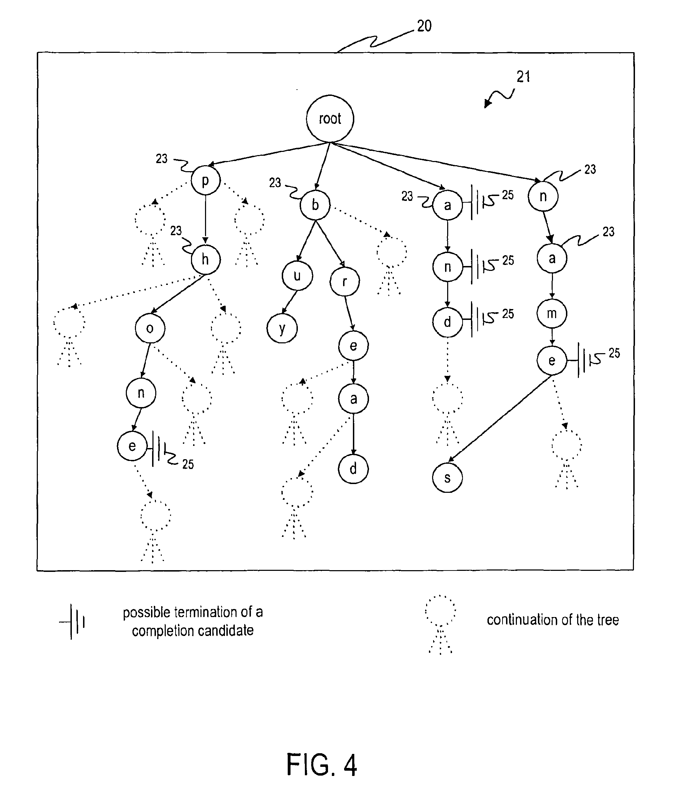

Referring to FIG. **4,** the dictionary **20** in the first embodiment is organized in a tree structure **21** containing a plurality of nodes. Completion candidates are stored in nodes **23** within the tree structure **21.** (The tree structure **21** is also referred to in this specification as a candidate tree **21.**) Preferably, the dictionary **20** is organized as a B-tree. Alternatively, the tree structure **21** may take other forms and may be static. Characters making up a completion candidate are stored in separate nodes within the tree structure **21.** A completion candidate is represented by a number of nodes, with each node pointing to a child node containing the next character in the completion candidate. An end-point flag identifies the end of a particular completion candidate formed by a set of nodes. The preference value of a completion candidate is handled by individual nodes in the candidate tree **21.** Thus, a completion candidate such as a word is represented by a number of nodes where each node points to a child node with the next character in the word.

Preferably, character sequences that form the beginning of multiple completion candidates share the same nodes in the candidate tree **21.** A completion candidate which forms the beginning of another completion candidate is identified with an end-point indicator **25** (for example, an end-point flag). When a node is shared by many completion candidates, the node will contain the highest preference amongst the completion candidates that the node is shared by.

The tree structure in FIG. **4** illustrates the configuration for a set of completion candidates which, by way of example, contains the following words: "phone", "buy", "bread", "a", "an", "and", "name" and "names". As indicated earlier, the dictionary **20** can be used to contain many completion candidates, including words, phrases, abbreviations, formulas, other character sequences and the like. The size of the dictionary **20** is limited only by the amount of memory available on the personal computing device concerned.

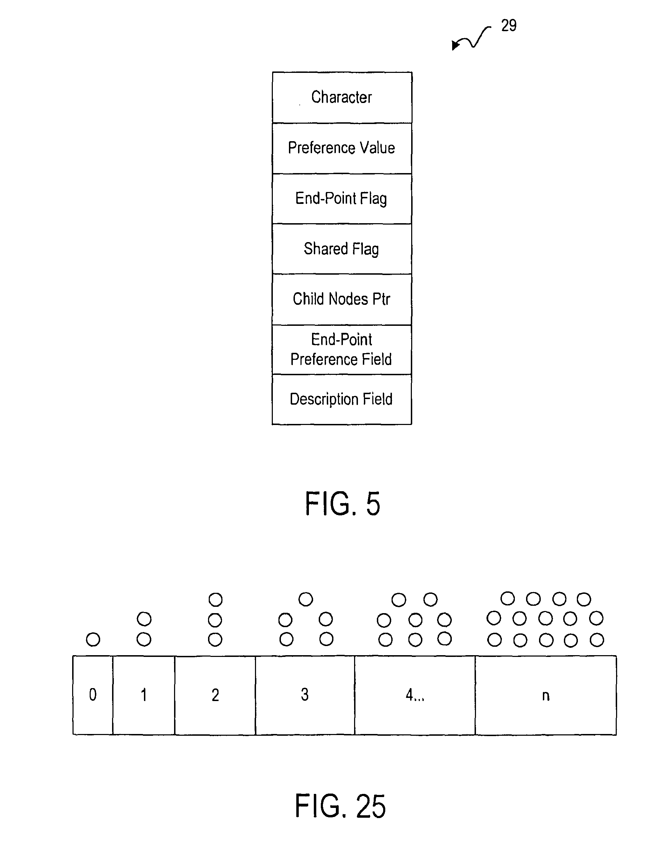

Referring to FIG. **4** and **5,** in the first embodiment a node **23** in the candidate tree **21** is defined by a data structure **29** which has fields containing the following information:
- 1.: a character for at least one completion candidate;
- 2.: a preference value representing a weighted value associated with the completion candidate that the current node forms a part of;
- 3.: an end-point flag indicating whether the current node ends a completion candidate;
- 4.: a shared flag indicating whether the current node is shared by multiple completion candidates (i.e. where the node forms part of a prefix to multiple completion candidates); and
- 5.: a child-list (or child nodes pointer) representing a list of nodes which directly follow the current node, i.e. a list of nodes which are the immediate children of the current node.

The information contained within the data structure **29** provides the basis for using the candidate tree **21** to rapidly predict potential completion candidates. The data structure **29** also provides a mechanism for supporting enhanced data entry techniques such as character prediction and the rapid navigation system **32** (FIG. **2**) described in further detail later in this specification.

Additional information about a node can also be contained in the data structure **29.** For instance, in the first embodiment a node also preferably contains an end-point preference field for indicating the preference of a completion candidate, formed down the candidate tree **21** to such a node, to end. In other words, the end-point preference field is used to store a preference value indicating the likelihood of the completion candidate, formed down the candidate tree **21** to the current node in the search path, to be selected by the user as a final completion candidate. With the end-point preference field the completion of words within the candidate tree **21** can be optimized when supporting the sharing of nodes representing a prefix to multiple completion candidates. Instead of creating separate nodes for multiple end-points to completion candidates that may arise along a particular path in the candidate tree **21,** the preference value that each end-point would have had if it was stored as a separate node is stored in the end-point preference field of the current node. This technique saves on the extra nodes necessary to complete completion candidates without sacrificing the functionality of completing completion candidates with the correct preference value (or frequency value). An example of the use of the end-point preference field is if the completion candidate "any" has a higher preference than the completion candidate "anything". As both "any" and "anything" have the same prefix, they are both defined along the same path of nodes within the candidate tree **21.** Since, in this example, the completion candidate "any" has a higher preference than the completion candidate "anything", the end-point preference field would be used to record the preference (or likelihood) of the completion candidate "any" to end (relative to other completion candidates in the dictionary).

Other information may also be stored in nodes within the candidate tree **21.** For instance, a node can include a description field for storing descriptive text associated with a completion candidate. A node may also have a pointer (a siblings pointer) which points to nodes that are the siblings of the current node. In other words, the siblings pointer points to sibling nodes, rather than nodes which are children. The siblings pointer can be traversed to locate sibling nodes of a given node.

In the first embodiment, the data entry system **26** is programmed to handle searching one or more dictionaries. If multiple dictionaries are active, then each will have its own candidate tree (such as candidate tree **21**) in which completion candidates are organized.

### Character Prediction

Referring to FIG. **2** and **3,** in another feature of the first embodiment, the dictionary engine **22** retrieves a set (or list) of possible characters that the user is likely to next select from in order to further build upon an existing partial text entry (i.e. a predicted set of next possible characters). Preferably, the predicted set of next possible characters are retrieved from the dictionary **20** as the user forms a partial text entry with the digital keyboard **28a** and, when used, the search list **30.**

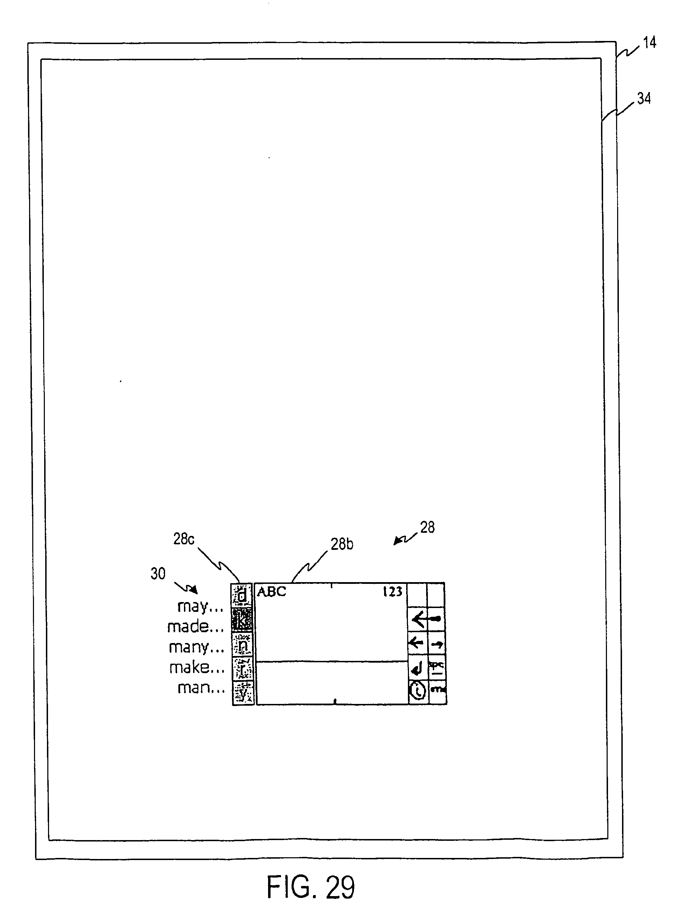

As a partial text entry is formed, the predicted set of next possible characters are displayed in a distinguishing manner on the user interface **34** for the user to easily recognize and select from. This feature helps visually inform the user as to which characters are most likely to follow those characters already entered as part of the partial text entry. In the first embodiment, the predicted set of next possible characters are displayed in a distinguishing manner on the digital keyboard **28a.** For illustration purposes, highlighting is used to distinguish characters on the digital keyboard **28a** corresponding to the predicted set of next possible characters from other characters on the digital keyboard **28a.** By distinguishing the predicted set of possible characters from other characters on the digital keyboard **28a,** the size of the digital keyboard **28a** in need of user attention is effectively reduced from its full size (28 keys in the first embodiment) to the small number of highlighted keys (no more than 5 keys in the first embodiment). Other display techniques can be used with the digital keyboard **28a** or with other types of character entry systems. For instance, in an alternative configuration, the predicted set of next possible characters are displayed separately from the character entry system **28** on the user interface **34** in a quick list of selectable characters (see for example the predicted character list **28c** in FIG. **29**).

With the first embodiment, a character from the predicted set of next possible characters can be selected to be added to the partial text entry, and can also be used to activate the rapid navigation system **32** which is described further on in this specification. Preferably, the predicted set of next possible characters is made up of a set of unique characters representing those characters that the dictionary engine **22** predicts to each have a high likelihood of being chosen next based on entered text and frequency values (preference values) for completion candidates within the dictionary **20.** The entered text represents the current partial text entry that the user is constructing using the data entry system **26.**

The determination as to which characters form the predicted set of next possible characters is based on a comparison of preference values along paths within the dictionary **20** that branch out from the path for the current partial text entry.

The dictionary **20** preferably also provides in the first embodiment thematic information about the predicted set of next possible characters. The thematic information provides characteristics associated with the predicted set of next possible characters. Preferably, the thematic information is used to further characterize the display of the predicted set of next possible characters on the user interface (in the first embodiment, on the digital keyboard **28a).** This adds to the information visually conveyed to the user when character prediction is used. Thematic information can provide the user with one or more characteristics associated with the predicted set of next possible characters. In the first embodiment, for example, the thematic information for a particular character in the predicted set of next possible characters represents the total number of potential completion candidates that are immediately available for display in search list **30** if that particular character is added to the end of the current partial text entry. A range of colors may be used to display the predicted set of next possible characters, with different colors being used to distinguish between characters having different characteristics based on the thematic information.

While one mode of highlighting may be used, in the first embodiment at least two modes of highlighting are preferably used to provide the user with more meaningful information when character prediction is used. This is achieved with the thematic information provided by the dictionary **20** about each character in the set of unique characters. As indicated earlier, in the first embodiment, the thematic information for a particular character in the set of unique characters represents the total number of potential completion candidates that are immediately available for display in search list **30** if that particular character is added to the end of the current partial text entry. With such thematic information, at least two modes of highlighting can be provided with character prediction. In the first embodiment, highlighting is color-based, and the colors red and green are used to provide two modes of highlighting. A first mode of highlighting (the color red) is used to visually indicate that if a character displayed in this first mode of highlighting is next selected by the user, then the total number of potential completion candidates immediately available for display in the search list **30** that begin with the current partial text entry plus the character selected exceeds the display capacity of the search list 30. A second mode of highlighting (the color green) is used to visually indicate that if a character on the digital keyboard **28a** displayed in this second mode of highlighting is next selected by the user, then the total number of potential completion candidates immediately available for display in the search list 30 that begin with the current partial text entry plus the character selected is less than or equal to the display capacity of the search list **30.**

It should be noted that while highlighting is used in the first embodiment to display in a visually distinguishing manner the set of unique characters that are most likely to follow those characters already entered (i.e. the next most likely characters), other forms of visually distinguishing characters can be used and are considered equivalent. For instance, shading, italics, bold, or underline may be used, individually or in various combinations, to distinguish one set of characters from another set of characters.

As well, other types of thematic information may be provided by the dictionary **20.** For instance, the thematic information for a particular character in the set of unique characters can represent the total number of potential completion candidates available, whether or not immediately displayable in the search list, if that particular character is added to the end of the current partial text entry. In another variation, the thematic information may provide the depth of the deepest branch in the candidate tree **21** if the particular character in the set of unique characters is added to the current partial text entry. This latter variation can be used to visually notify the user that certain characters in the set of unique characters have many levels of search results available, while other such characters may have only one level of search results left for display in the search list **30.**

### Search List

The search list **30** receives completion candidates retrieved from the dictionary **20** and presents the user with a list of these completion candidates. In the first embodiment, the search list **30** is preferably displayed on the touch-sensitive screen **14** as an arc-shaped list of completion candidates. With the arc-shaped display of the list of completion candidates, a user may also move between completion candidates in the arc-shaped list by gesturing along the arc of the arc-shaped list. The user can make a selection by moving the pointing device towards a candidate in the list with one's hand in a motion substantially radial to the arc-shaped list. The arc-shaped search list provides an easy motion for the hand to move the pointing device towards a completion candidate. With a digitally displayed computer entry system **28,** the search list **30** is preferably near or next to the image of the character entry system **28** for easy viewing (for example, beside digital keyboard **28a**). In alternative embodiments, the list of completion candidates may be displayed in other configurations, such as a vertical list, horizontal list or an X-shaped list.

The search list **30** is programmed to support multi-level searches so that the user can quickly use a selected completion candidate from one level of search results to drill deeper into the dictionary **20** for a set of completion candidates that each begin with the selected completion candidate.

In the first embodiment, the total number of completion candidates retrieved is limited by a predetermined maximum number of displayable completion candidates. In the case of the first embodiment, the maximum number of displayable completion candidates is set to five. The search list **30** can be configured, however, to present a greater or lesser number of completion candidates.

### Search Path Structure

Referring to FIG. **2, 3** and **6,** a data structure **31** is used by the dictionary engine **22** to keep track of the current search path within dictionary **20** for a given partial text entry. The data structure **31** is referred to here as a "search path structure". As the user uses the digital keyboard **28a** and the search list **30** to build a partial text entry, the contents of the search path structure are modified to reflect changes in the search path. In the first embodiment the search path structure **(31)** contains the following fields:

**Table 1**

| **Field** | **Description** |
|---|---|
| nPathNodes | the number of nodes currently representing the current partial text entry that the user has constructed |
| nNullMovements | the number of advances or movements made outside of the candidate tree 21 with the current partial text entry. |
| nSpacesAppended | a variable indicating the number of spaces appended to the end of the current partial text entry. For every space appended the nNuilMovements field is increased. |
| spaceHeldDownFlag | a flag indicating whether or not the last character in an entered sequence of characters was a space. When using chunks, a space is sometimes not appended and does not need to be removed if the user backs up. |
| currentPath data structure | the current search path within the candidate tree 21 of dictionary 20. |

The currentPath data structure is used to keep track of the actual search path formed within the dictionary **20** by the current partial text entry (i.e. the current text entered by the user).

The currentPath data structure contains a set of entries, with an entry for every node traversed in the candidate tree. Each entry in the currentPath data structure contains the following fields:

**Table 2**

| **Field** | **Description** |
|---|---|
| currentNode pointer | a pointer to the a node in the candidate tree 21. The node pointed to forms part of the search path. |
| nUndoMoves | an optional marker used to indicate the number of backspaces (nodes) necessary to remove the previous action (i.e. to remove the word, chunk, or character last entered, as the case may be). |
| isUpperCase | a mode indicator to indicate whether the character should be in upper case or not for the current partial text entry. |

In the first embodiment, the search path structure also includes the following fields:

**Table 3**

| **Field** | **Description** |
|---|---|
| periodHeldDownFlag | a flag to indicate whether or not the last character was a period. |
| literalFlag | a flag to indicate whether or not case translation is required |

It will be appreciated that while case translation and punctuation can be of assistance, they need not be included in order to take advantage of either character prediction, the rapid navigation system, or the other aspects of the present invention.

### Rapid Navigation System

In the first embodiment, two primary entry modes are available to the user: a character entry mode and a rapid search mode. In the character entry mode, the user can enter text a character (or keystroke) at a time by simply pointing and selecting on keys on the digital keyboard **28a** with the pointing device. If the character entry system **28** is a script-based or hand-writing recognition system, then text can be entered using the script recognized by the character entry system **28** to enter characters. In the first embodiment, with each selection of a key on the digital keyboard **28a,** the one or more characters that are associated with the selected key are sent to the application **27** for entry into text in, for example, a document or data entry field. As the user enters characters with the digital keyboard **28a,** a partial text entry is formed. The partial text entry is used to retrieve a set of completion candidates which are displayed in the search list **30.** As the user adds or deletes characters from the partial text entry using the digital keyboard **28a,** an updated set of completion candidates is retrieved from the dictionary **20** and displayed in the search list **30.**

In the rapid search mode, the character entry system **28** (digital keyboard **28a**) is cleared from the display and replaced with a rapid navigation system **32** which is used in conjunction with the search list **30** to rapidly traverse and select from potential completion candidates within the dictionary **20.**

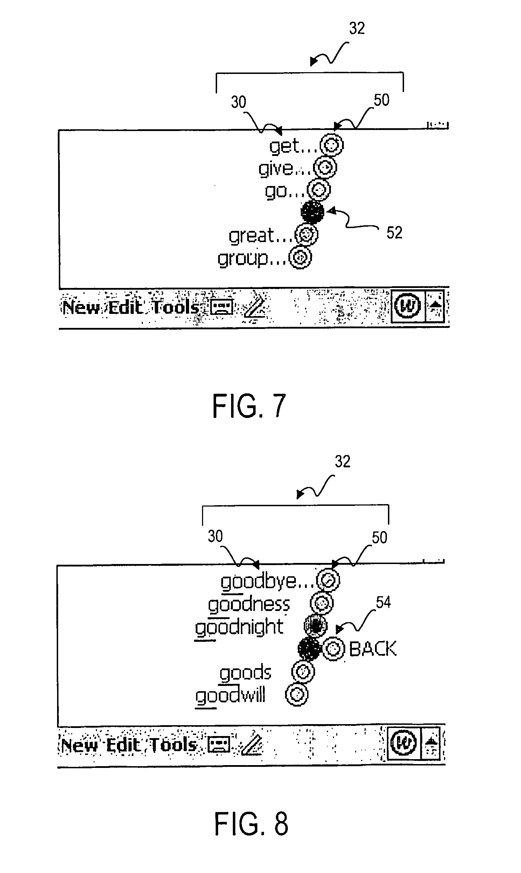

The rapid navigation system **32** (also referred to as a rapid navigation tool) comprises a navigational object for navigating amongst sets (or lists) of completion candidates each beginning with the current partial text entry constructed using the digital keyboard **28a** and the search list **30** (see, for instance, navigational object **50** in FIG. **7**).

Referring to FIG. **7,** the rapid navigation system **32** is illustrated in operation. The rapid navigation system **32** contains, in the first embodiment, the navigational object **50,** a dead zone **52** and a back-up key **54** (FIG. **8**). The navigational object **50** is displayed as a set of selection targets arranged in an arc-like manner. The search list **30** is also displayed with the navigational object **50.** In the first embodiment, the selection targets are displayed as buttons having a first region (inner circle) for highlighting in a first mode and a second region (outer ring) for highlighting in a second mode. The inner circle of a selection target is used to indicate when a corresponding completion candidate in the search list **30** has been pointed to as a choice for selection. The outer right of a selection target is used to indicate when a selected completion candidate is to be used either as a final result or as the basis of a further search for completion candidates that are based on the selected completion candidate. Other graphical representations of the selection targets may be used. For instance, buttons may be rectangular, or other graphical objects may be used. As in the keyboard mode, the search list **30** contains completion candidates, with chunks being identified with a chunk identifier (in this case, chunks end with the sequence "...").

In the example shown in FIG. **7,** the user has already typed in a "g" before activating the rapid navigation system **32.** The "g" represents the sequence of characters that the user last entered or selected as a root for a search of the dictionary **(20).** The sequence of characters that last served as the root for a search are preferably displayed in a distinguishing manner in each completion candidate displayed in the search list **30.** In the first embodiment, this is done by displaying the root in solid black, and the remaining portions of the displayed completion candidates are displayed in a different color from the "g". When a completion candidate is selected from the search list **30,** the selected completion candidate is highlighted. If the completion candidate selected is a chunk (for example, "go..."), then in order to retrieve completion candidates based on the selected chunk, then the user pauses the pointing device for at least a pre-determined time with the chunk selected. In the first embodiment, the data entry system **26** is programmed to retrieve completion candidates which begin with the selected chunk when the chunk is selected for at least 100 milliseconds. Another predetermined time limit, however, may be used to trigger such a retrieval. For example, a time limit in the range of about 10 milliseconds to about 500 milliseconds or more (if desired) may be used.

Once the user selects a chunk from the search list **30** and pauses for a short time, the most common completion candidates that begin with the selected chunk are retrieved from the dictionary **20** and the rapid navigation system **32** is redisplayed with these latter completion candidates in the search list **30.**

FIG. **8** illustrates the redrawn rapid navigation system **32** when the chunk "go" is selected. Note that now the word "go" is the root of what the user has entered and is shown in a distinguishing manner from the trailing characters of the completion candidates. In FIG. **8** the user has selected the completion candidate "goodnight". If the user lifts the pointing device with the completion candidate "goodnight" selected, then this completion candidate is chosen as a final selection which is entered into the document displayed in the application window (see FIG. **2**). Since, in this example, "goodnight" is not a chunk, it may also be added as a final selection to the document by simply keeping it selected for at least a predetermined period of time (for example, 100 milliseconds).

The back-up key **54** provides a mechanism for reverting to the previous list of completion candidates shown in the rapid navigation system **32** based on the sequence of characters that last served as the root for a search prior to the current root. For example, if, rather than selecting a completion candidate from the list in FIG. **8,** the user wishes to revert to the previous list of completion candidates shown in FIG. **7** (which are based on the root "g") the user may select the back-up key **54.** When the back-up key **54** is selected, the rapid navigation system **32** will then revert to the sequence of characters that last served as a root for a search (which in this case was "g").

### Terminating a Search

A search for completion candidates based on a current partial text entry (i.e. a given character sequence entered using the data entry system **26**) can be terminated in a variety of ways. A search is terminated when the user selects and accepts one of the completion candidates in the search list **30** as a completion to the current partial text entry. In the first embodiment, this is done by lifting the pointing device up before a predetermined amount of time while selecting a completion candidate in the search list **30,** in which case the data entry system **26** is programmed to recognize that the user has completed the current partial text entry and automatically initializes so that the next character entered using the character entry system **28** (digital keyboard **28a**) will be treated as a leading character for a new partial text entry. Alternatively, entry of a predetermined character using the character entry system **28** can terminate a search. For instance, when a user enters a space or period while constructing a partial text entry, the data entry system **26** is preferably programmed to terminate the search and to prepare for a new search of the dictionary **20** based on a new partial text entry. In this case, characters such as the space and the period (".") serve the dual role of characters that form part of text and as an implicit instruction to end a search. Other non-alphabetic characters may also be used to provide an implicit end-of-search instruction. As a variation, an express end-of-search button or key may be displayed with the character entry system **28** which does not serve the dual role of entering a character into a document. When the end-of-search button is selected by the user, the data entry system **26** is instructed to end the present search and prepare for a new search.

### System Flow

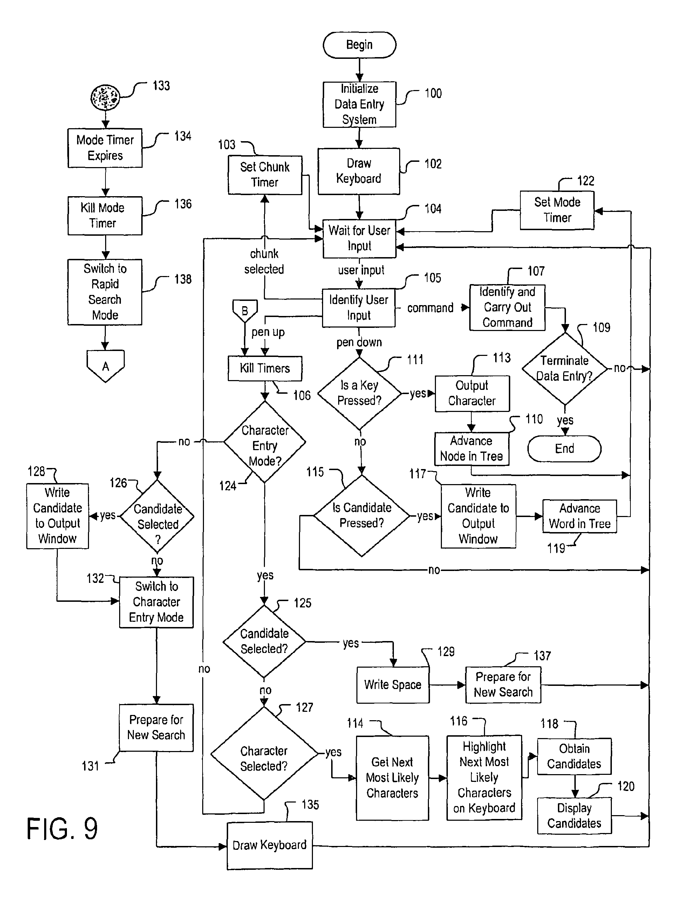

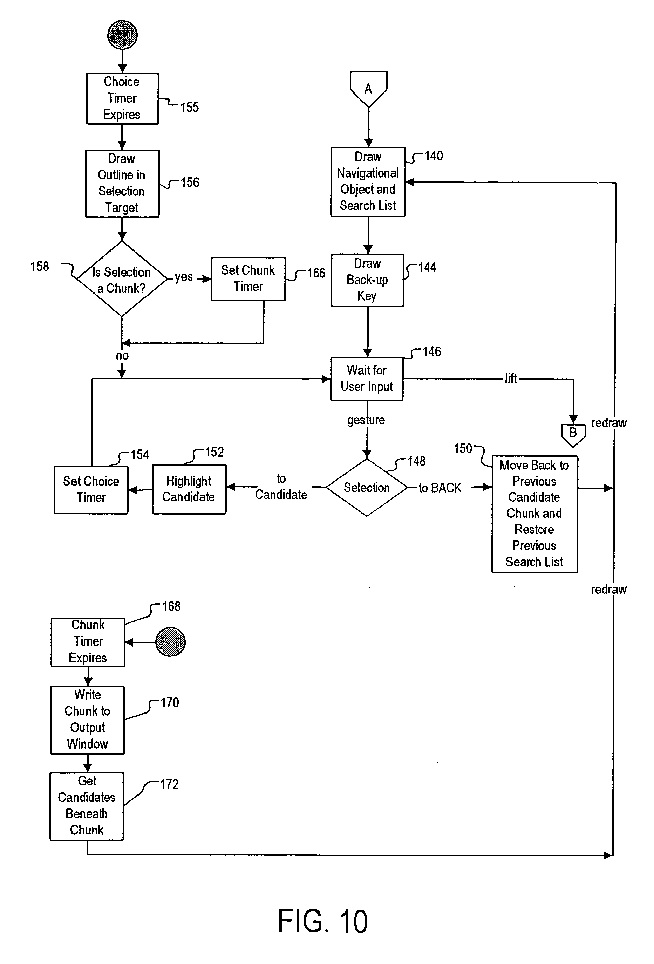

Referring to FIG. **9** and **10,** logical flow diagrams illustrate the operation of the data entry system **26** shown in FIG. **2, 3, 5** and **6.**

The data entry system **26** is initialized at block **100** in FIG. **9.** Initialization includes selecting the dictionary **20,** identifying the type of pointing device that will be used by the user, loading and setting up the character entry system **28,** initializing variables and flags used to track user input, processing and output, and setting up any other options and user-defined configurations.

At block **102** an image (visual representation) of the character entry system **28,** in this case the digital keyboard **28a,** is displayed on the touch-sensitive screen **14.** The data entry system **26** waits for user input from the pointing device at block **104.** Once user input is received it is analyzed at block **105.** If the received user input corresponds to the pointing device being pressed down on the user interface in association with the digital keyboard **28a** or the search list **30,** then processing proceeds to block **111.** At block **111** the data entry system **26** determines if key on the digital keyboard **28a** was pressed, and if the answer is "YES", the data entry system **26** identifies the character associated with the pressed key. The identified character is written to the output window (i.e. output to the user interface) at block **113** and is used to delineate a search path within the dictionary **20.** In the first embodiment, this is done at block **110** by advancing a node within the candidate tree **21** in search of potential completion candidates.

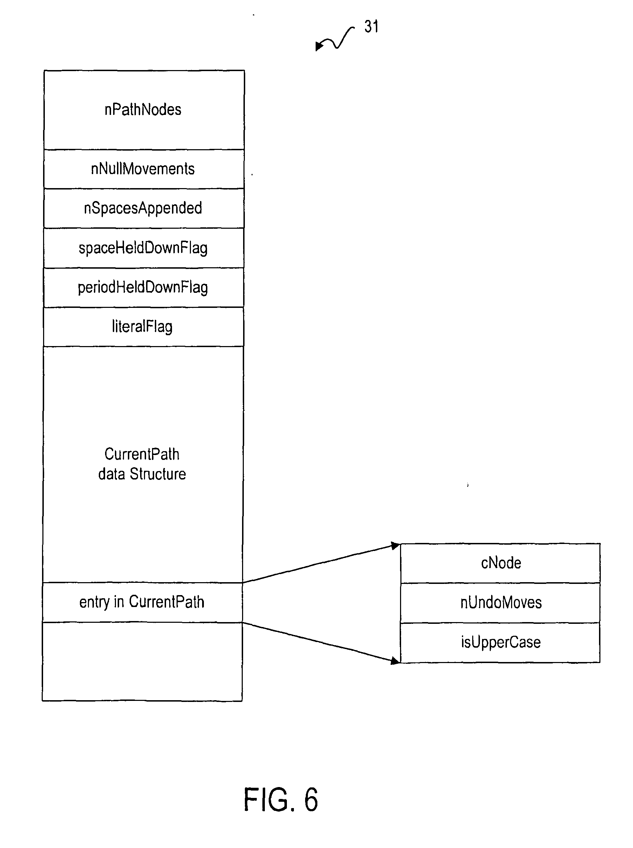

If the data entry system **26** determines at block **111** that a key was not pressed, then processing proceeds to block **115** to determine if a completion candidate in the search list **30** has been selected. If a completion candidate has been selected then it is written to the output window (i.e. the user's document) at block **117.** At block **119,** the dictionary engine **22** advances in the candidate tree **21** by the completion candidate selected (for example, by the word chunk selected). Tracking variables and flags within the search path structure (FIG. **6**), including the currentPath data structure, are updated by the dictionary engine **22** to record the advance of the search path by the selected completion candidate. As described further on in this specification, once the user selects a chunk from the search list **30** and pauses for a short time (until the mode timer expires), potential completion candidates that begin with the selected chunk are retrieved from the dictionary **20** and the rapid navigation system **32** is displayed with the retrieved completion candidates.

Block **105** is used to also identify when a user has carried out another action, such as selecting a command, lifting the pointing device from the touch-sensitive screen **14** (i.e. "off tablet" or "pen up") or selecting a chunk from the search list **30** when in character entry mode. These actions are discussed in further depth further on in this description. Examples of commands that may be selected include common word processing commands such as Enter, Backspace, Shift, CTRL (control key), and Delete, and other commands such as display an additional number or symbol keypad, and terminate data entry.

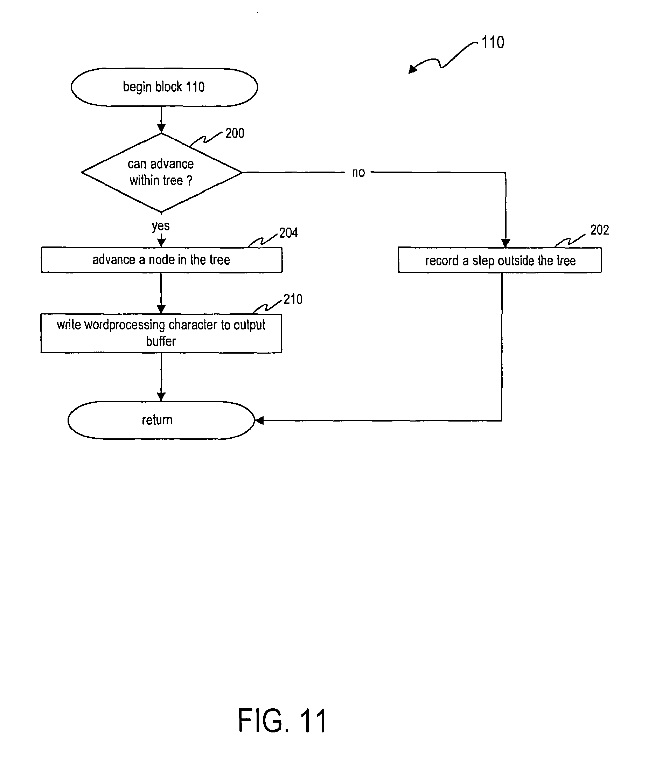

Block **110** is shown in further detail in FIG. **11.** At block **200** the dictionary engine **22** checks whether or not it can continue to traverse the candidate tree **21** with the addition of the new character. If not, then the existing partial text entry prior to the new character has already taken the dictionary engine **22** outside of all possible paths within the candidate tree **21** and the addition of the new character is an operation that will not produce any potential completion candidates from the dictionary **20.** In this case, processing proceeds to block **202** where the new character is added to the partial text entry without searching the dictionary **20** for completion candidates. If the dictionary engine **22** determines at block **200** that it can advance within the candidate tree **21,** then processing proceeds to block **204.** At block **204,** the dictionary engine **22** advances in the candidate tree **21** to a node that contains the new character selected by the user. Tracking variables and flags within the search path structure, including the currentPath data structure, are updated by the dictionary engine **22** to record the advance of the search path by a node within the candidate tree **21.** At block **210,** a word processing character corresponding to the new character is written to an output buffer for subsequent display in the electronic text that the user is creating or modifying with the data entry system **26.** Processing then proceeds to block **122** in FIG. **9** where a mode timer is set. Processing then returns to block **104** where the data entry system **26** waits for further user input.

Referring to FIG. **2, 3** and **9,** the mode timer set at block **122** is used to determine when the data entry system **26** should be in character entry mode and when it should be in rapid search mode. By default, the data entry system **26** begins in character entry mode, with the digital keyboard **28a** displayed. Once the mode timer is set at block **122,** the data entry system **26** monitors the mode timer to determine if the timer has expired. It will be noted that the solid circle at block **133** simply denotes a parallel process involving such monitoring. If the mode timer expires while a key on the digital keyboard **28a** is depressed (block **134**), this event serves as an indication to the data entry system **26** that the user wishes to use the rapid navigation system **32** to navigate and select from groups of potential completion candidates. In this case, the mode timer is stopped at block **136** and the data entry system **26** switches to rapid search mode at block **138.** The operation of the rapid navigation system **32** in rapid search mode is discussed further on in this description (with reference to FIG. **10**).

In the first embodiment, when the user lifts the pointing device from the touch sensitive screen **14** after having selected a character from the digital keyboard **28a** but before the mode timer expires, the data entry system **26** identifies and highlights a predicted set of next possible characters on the digital keyboard **28a** and retrieves and displays in the search list **30** a set of possible completion candidates. When the pointing device is lifted up from a key on the digital keyboard **28a** before the mode timer expires, processing proceeds to block **106** where the mode timer is terminated. The data entry system **26** then checks the data entry mode at block **124.** In this particular example, the data entry mode is in character entry mode and the user has lifted up the pointing device to either continue adding to or modifying the current partial text entry. Therefore, processing will then proceed to block **127** via block **125.** At block **127** the data entry system **26** will evaluate whether a character has been selected from the digital keyboard **28a.** In the above example, the answer is "YES" and processing will proceed to blocks **114, 116, 118** and **120** so as to highlight the predicated set of next possible characters on the digital keyboard **28a** and to obtain and display a set of possible completion candidates in the search list **30.** Processing will then return to block **104** where the data entry system **26** will wait for further user input.

The operation of blocks **114, 116, 118,** and **120** in FIG. **9** will now be discussed further.

Referring to FIG. **2, 3** and **9,** at block **114** the data entry system **26** instructs the dictionary engine **22** to use the dictionary **20** to predict and retrieve a set of set (or list) of possible characters that the user is likely to next select from in order to further build upon an existing partial text entry (i.e. a predicted set of next possible characters). Preferably, the predicted set of next possible characters represent a set of unique characters that are most likely to follow those characters already entered as part of the current partial text entry. As will be recalled, a partial text entry represents a sequence of one or more characters which the user has already formed using the digital keyboard **28a** or using the digital keyboard **28a** in combination with the search list **30.** In the first embodiment, the dictionary engine **22** retrieves up to five characters for the set of unique characters, although a greater or lesser number of characters may be retrieved in other embodiments if desired.

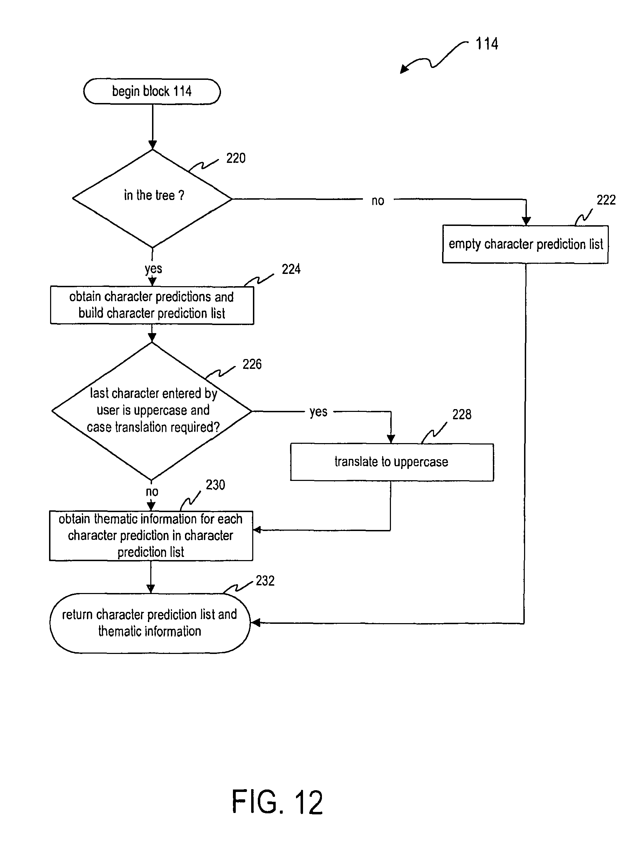

Block **114** is shown in further detail in FIG. **12.** At block **220** the dictionary engine **22** evaluates whether or not it can continue to traverse the candidate tree **21** from the current position of the search path so as to find any potential characters that immediately follow the last character in the partial text entry. With the node structure illustrated in FIG. **4,** this is done by checking the child-list (child nodes pointer) of the last node identified in the currentPath data structure within the search path structure ("last node" is also referred to here as the current node in the currentPath). If the child-list of the last node in the currentPath data structure is empty, then there are no further branches in the candidate tree **21** from the current position of the search path leading to any potential characters that could immediately follow the last character in the partial text entry. In this case, processing proceeds to block **222** where a character prediction list is set to empty and then returned at block **232** to the data entry system **26** to inform it that no character predictions have been found. If the dictionary engine **22** determines at block **222** that it can advance within the candidate **21** tree from the current position in the search path (i.e. if the child-list is not empty), then processing proceeds to block **224.** At block **224,** the dictionary engine **22** looks at the preference values for each of the nodes referred to in the child-list and retrieves the five nodes having the highest preference values. If five or fewer nodes are referred to in the child-list, then the dictionary engine **22** retrieves all of the nodes in the child-list. For each node retrieved, the character contained within that node is retrieved and placed in the character prediction list. At block **230,** the dictionary engine **22** also traverses the child nodes of the retrieved nodes (from block **224**) to in order to retrieve thematic information about each of the characters in the character prediction list. In the first embodiment, the thematic information retrieved for a particular character in the character prediction list represents the total number of potential completion candidates that are immediately available for display if that particular character were added next to the end of the current partial text entry. Thus, block **230** obtains, for each character in the character prediction list, a predicted number of candidates representing the number of completion candidates that would be immediately available for display if that character in the character prediction list were added next to the current partial text entry. This thematic information is used by the data entry system **26** at block **116** (FIG. **9**) to support multiple highlighting modes when character prediction is used.

When upper case translation is active, then at block **226** the dictionary engine **22** preferably evaluates whether or not the characters in the character prediction list need to be converted to upper case. If the answer is YES, then each character in the character prediction list is translated to upper case at block **228.**

Block **232** provides the data entry system **26** with the character prediction list and the thematic information retrieved at block **230** for each character in the character prediction list. Processing then proceeds to block **116** in FIG. **9.**

Referring to FIG. **2, 3** and **9,** at block **116** the data entry system **26** instructs the digital keyboard **28a** to highlight keys that contain any of the characters in the character prediction list. Two modes of highlighting are used in the first embodiment. The data entry system **26** determines which highlighting mode to use for a character in the character prediction list based on thematic information returned from block **232** (FIG. **12**). A character in the character prediction list that is displayed in the first mode of highlighting (for example, the color red) if such character has a predicted number of candidates greater than the display capacity of the search list **30.** A character in the character prediction list is displayed in the second mode of highlighting (for example, the color green) if it has a predicted number of candidates that does not exceed the display capacity of the search list **30.**

At block **118** the data entry system **26** instructs the dictionary engine **22** to retrieve a set of completion candidates for display in the search list **30** based on the current partial text entry. In the first embodiment, the dictionary engine **22** retrieves at block **118** potential completion candidates which have the highest preference values in the dictionary **20,** meaning that they are the most likely to be what the user is looking to choose from. The dictionary engine **22** retrieves the five completion candidates that begin with the current partial text entry and that have the highest preference values. If less than five such completion candidates are available, all completion candidates that begin with the current partial text entry are retrieved from the dictionary **20.** It should be noted that in other embodiments the dictionary engine **22** may retrieve more than five completion candidates, or less, if desired. However, about five to about seven completion candidates (if available) is considered preferable so as to provide the user with a reasonable number of selections to choose from without reducing the ability of the user to quickly scan and select from candidates displayed in the search list **30.**

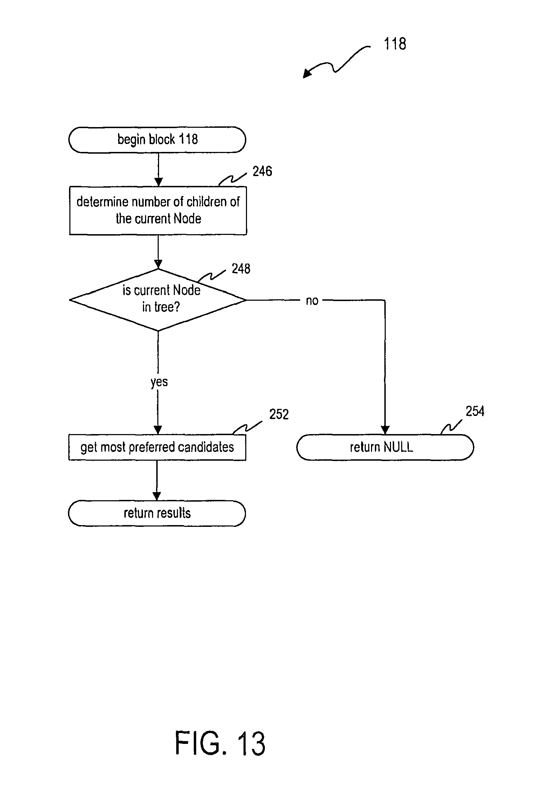

Block **118** is shown in further detail in FIG. **13.** At block **246** the dictionary engine **22** has the ability to peek ahead into the candidate tree **21** to determine how many child nodes there are below the current node. It will be recalled that the current node is the node which the search path has advanced into in block **110** (FIG. **9**). This can be done by looking at the child-list for the current node (i.e. the child list for the last node in the currentPath data structure). At block **248** the dictionary engine **22** can check to see if the current node is in the candidate tree **21.** If it is, then processing proceeds to block **252.** If not, then NULL is returned at block **254.**

At block **252** a set of potential completion candidates are retrieved for the search list **30.** This is carried out by searching the dictionary **20** based on the given partial text entry which has been formed. Note that a "potential completion candidate" is a completion candidate that begins with the given partial text entry that is being used as the basis for the current search. In conducting such searching in the first embodiment, the data entry system **26** leverages the structure of the candidate tree **21** to retrieve a set of potential completion candidates for a given partial text entry. The candidate tree **21** is weighted in favor of nodes containing characters forming completion candidates with high preference values. This makes it convenient to find, for a given partial text entry, the completion candidate with high preference values.

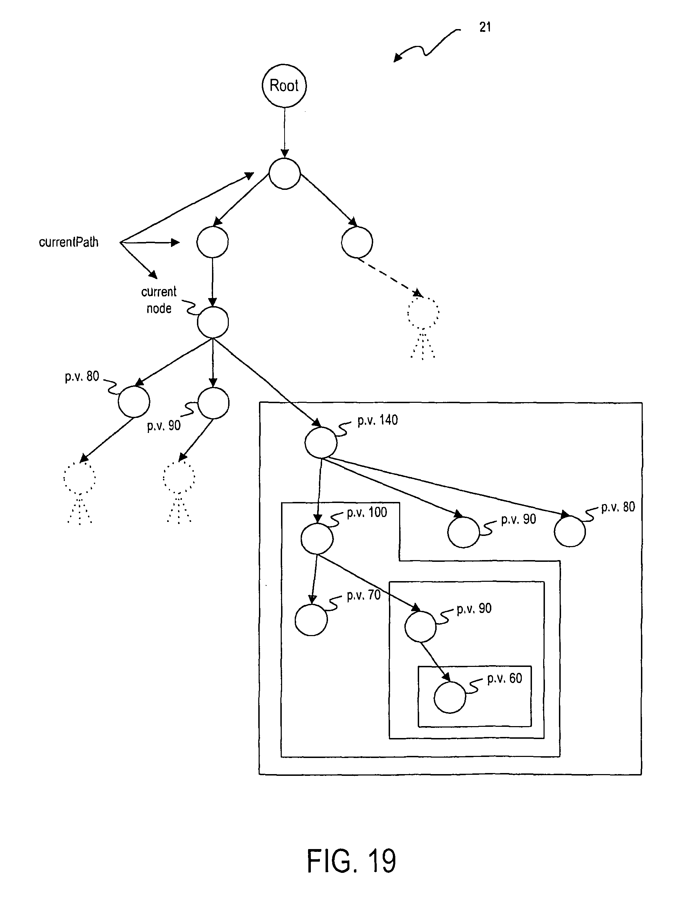

In the first embodiment completion candidates are generally retrieved by traversing down branches in the candidate tree **21** from the current node in the search path. The currentPath data structure is used so that the data entry system **26** need only perform a search starting from the latest node added to the currentPath data structure. From the latest node, the dictionary engine **22** finds the child node with the highest preference value and descends down the candidate tree **21** along the path defined by this child node (an illustrative example of a path within candidate tree **21** being recorded with the currentPath data structure is shown in FIG. **19**). In general, the search for a completion candidate stops when either a leaf is encountered (i.e., an end point) or a chunk ending node is encountered that has a preference value that is stronger than any child nodes that follow the last node in the chunk. Once an end point node or a chunk ending node with a preference value that is stronger than the following nodes is found, the resulting completion candidate is retrieved and stored in the search cache. A retrieved completion candidate's influence on the weighting of the candidate tree **21** is then temporarily neutralized or reduced (weakened), depending upon the nature of the search. If the search underway is a "wide" search, then the retrieved completion candidate's influence on the weighting of the candidate tree **21** is temporarily neutralized. If the search underway is a "deep" search, then the retrieved completion candidate's influence on the weighting of the candidate tree **21** is temporarily reduced.

The dictionary engine **22** then traverses back up the candidate tree **21** to the latest node in the currentPath from which the search began, depreciating or neutralizing the preference value of each node that it traverses on the way back up. On the traversal back up to the latest node in the candidate tree **21** from which block **252** was originally called, if there is only one descendant for a parent node, the preference value of the descendent is temporarily used to replace the preference value of the parent node. If, on the other hand, there is more than one child to a parent node, then the parent node's preference value is reduced to the preference value of its second strongest child node, provided that the drop in preference value is substantial enough.

With the influence of the retrieved completion candidate neutralized or reduced, a further search of the candidate tree **21** for a potential completion candidate will retrieve a potential completion candidate that generally has a preference value lower than the completion candidate already retrieved and stored in the search cache. Once a second completion candidate is retrieved, its influence on the weighting of the candidate tree **21** is also temporarily neutralized or reduced (depending upon whether the search is a wide search or deep search) so that a further potential completion candidate can be retrieved that is different from the previous ones retrieved, and so forth.

Repeating this neutralizing or depreciating process as each potential completion candidate is retrieved, allows the dictionary engine **22** to retrieve a set of potential completion candidates having generally the highest preference values for a search based on the given partial text entry. The proviso "generally" the highest preference values is used here because whether the search results have in fact the highest preference values possible for a given partial text entry depends upon whether a "wide" search or "deep" search was performed. If a deep search was performed, then the potential completion candidates making up the search results (also referred to herein as "deep search results") will represent the highest preference values possible for a search based on the given partial text entry. If a wide search was performed, then the potential completion candidates making up the search results (also referred to herein as "wide search results") may contain potential completion candidates which have high, but not necessarily the highest, preference values for the search of the dictionary based on the given partial text entry. The reason for this is that when a wide search is conducted on a dictionary (such as dictionary **20**), then the dictionary engine **22** searches the dictionary **20** to retrieve completion candidates one completion candidates at a time. With each search of the dictionary **20** performed in a wide search, the dictionary engine **22** continues along a search path within the dictionary until it either finds a node below which it can find no other completion candidates which are potentially stronger than the completion candidate found or until it reaches a node which is configured to indicate that child nodes below it represent suffixes to the completion candidate formed up to that point in the dictionary **20.** In this specification, "suffix" means a commonly occurring ending. Once a completion candidate is retrieved using the wide search technique, the retrieved completion candidate's influence on the weighting of the candidate tree **21** (and thus dictionary **20**) is temporarily neutralized. As a result, further searching of the dictionary **20** for completion candidates during a wide search will not lead to that retrieved completion candidate or to longer completion candidates based on that retrieved completion candidate.

With a deep search, the dictionary engine **22** looks for the strongest path in the dictionary **20** below the latest node in the currentPath data structure in order to obtain a completion candidate. Once that path is found, the dictionary engine **22** temporarily reduces (weakens) the values within that path so that it is less likely to be traversed in further searches for completion candidates within a deep search. However, a weakened path may still be traversed within further searching conducted in a deep search, although this is less likely to occur due to the temporary weakening of preference values in that path. As well, when a deep search is performed on the dictionary **20,** the dictionary engine **22** is not affected by suffix indicators.

Once the search (wide or deep) for potential completion candidates for a given partial text entry is finished, the original preference values stored in the memory mechanism are restored in the candidate tree **21.**

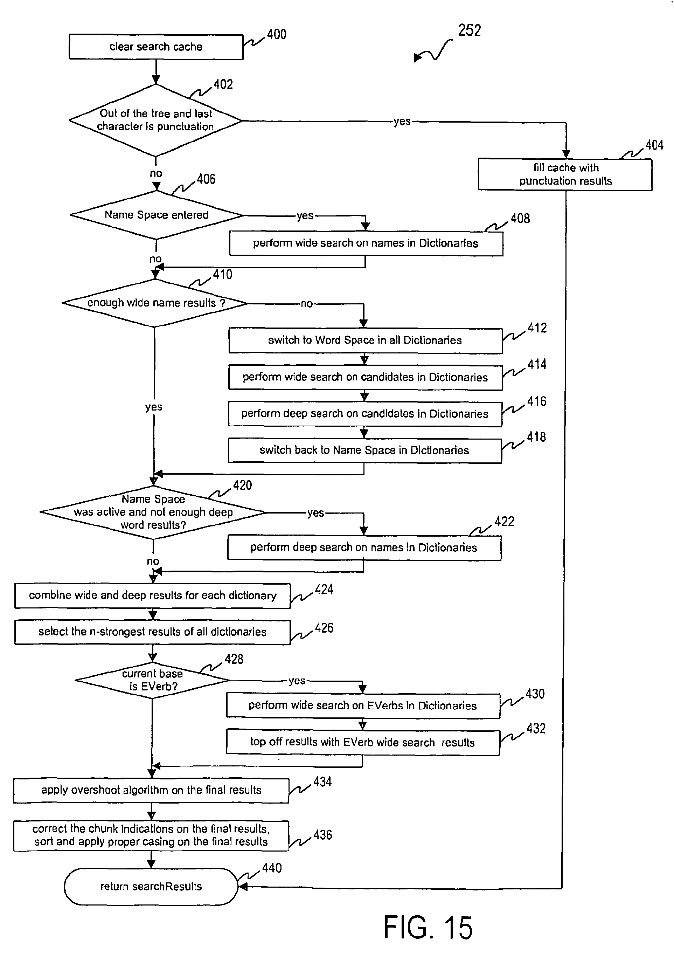

Referring to FIG. **15,** a flow diagram illustrates searching within block **252** further. At block **400,** the search cache is cleared of any previous search results which it may contain. At block **402** the dictionary engine **22** checks to see if the existing search path has taken the dictionary engine **22** out of the candidate tree **21** and if so, whether the last character entered by the user was a punctuation mark. If the answer to both questions at block **402** is "YES", then processing proceeds to block **404** where the dictionary engine **22** fills the search cache with potential punctuation results which are then returned as the search results that are displayed in the search list **30** at block **120** (FIG. **9**). This optional feature enables the data entry system **26** to make available a set of predetermined punctuation results or the like in the event no further searching is possible in the dictionary **20.** As one variation, in the place of punctuation results, the dictionary engine **22** can fill the search cache at block **404** with generic top level domain name engines such as ".com", ".net", ".org", ".edu", ".ca". This provides the user with a convenient list of completion candidates which can be made available to the user if no further searching is possible.

If the evaluation at block **402** is negative, then processing preferably proceeds to block **406** at which point the dictionary engine **22** checks to see whether the current search involves a search of the "name space". The "name space" refers to a designated portion of the dictionary **20** which is used to store capitalized names of people, places, and things. If multiple dictionaries are active, then each dictionary may have its own name space. A user enters the name space portion(s) of the active dictionary (ies) by beginning an entry with a capitalized character. In general, when the name space has been entered, then in further searching for completion candidates the dictionary engine **22** will look to obtain completion candidates first from the name space portion(s) of the active dictionary(ies) and if a sufficient number of completion candidates are not available to fill the search list **30,** then further searching of the remainder of the dictionary(ies) (such as dictionary **20**) will be carried out in order to try to fill in empty slots in the search results for the dictionary (each active dictionary).

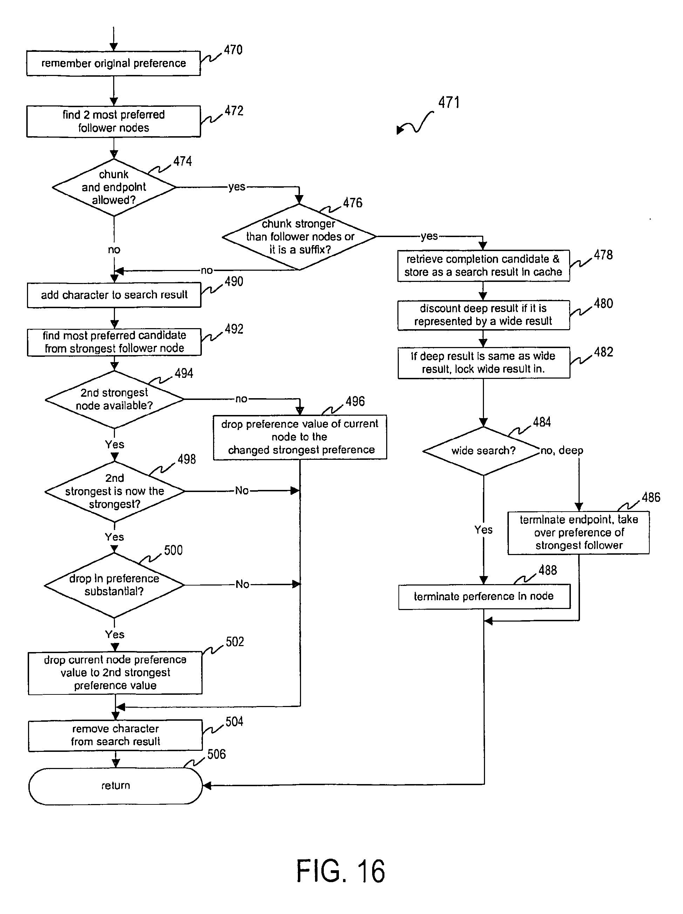

If the evaluation at block **406** finds that the name space has been entered, then processing proceeds to block **408** before proceeding to block **410.** At block **408,** searching of the name space portion(s) of the active dictionary(ies) is performed. A "wide" search is performed at block **408** on names within the name space(s) of the active dictionary(ies). With a wide search, the dictionary engine **22** retrieves completion candidates from each dictionary based on the relative strength of potential paths within each dictionary. The wide search at block **408** is described in further detail below with reference to FIG. **16.** If multiple dictionaries are active, then the wide search at block **408** will produce a results set for each active dictionary searched. Once the results of the wide search at block **408** are retrieved, processing proceeds to block **410.**

At block **410,** the dictionary engine **22** checks to see if enough name results were obtained from the wide search performed at block **408** (if such a search was conducted). For instance, if the search list **30** is to display up to five completion candidates, then block **410** evaluates whether or not the results obtained from the wide search at block **408** have resulted in five completion candidates being obtained. This evaluation is done on each results set if multiple dictionaries are active. If the answer at block **410** is "NO", then processing proceeds to blocks **412, 414, 416,** and **418.** At block **412,** the dictionary engine **22** switches to the word space within each of the active dictionaries. At block **414** a wide search is performed by the dictionary engine **22** for each of the active dictionaries. A deep search is then performed by the dictionary engine **22** at block **416** on each of the active dictionaries. The results of these wide searches and deep searches for each of the active dictionaries are then temporarily stored and the dictionary engine **22** switches back to the name space within each of the active dictionaries at block **418.** From the searching performed at blocks **414** and **416** above, up to N wide search results and M deep search results may be obtained for each active dictionary. Thus, for example, if N and M each equal five, and two dictionaries are active, the search results obtained at blocks **414** and **416** can include five results from the wide search performed on the first dictionary, five results from the wide search performed on the second dictionary, five results from the deep search performed on the first dictionary, and five results from the deep search performed on the second dictionary.

At block **420,** the dictionary engine **22** looks to see whether or not the name space was active and if so, whether or not enough results were obtained from the deep searches performed at block **416.** Not enough results from deep searching a block **416** will have been considered to have been obtained if any of the deep search results for any of the dictionaries searched contain fewer than the maximum number of completion candidates that they can contain (i.e. M results). If the dictionary engine determines at block **420** that the name space was active and not enough deep search results were obtained at block **416,** then processing proceeds to block **422** where deep searches are performed on the name space portions of the dictionaries in an effort to obtain additional completion candidates to fill in available space within the deep search results obtained at block **416.**

Referring to FIG. **16,** there is shown an algorithm **471** which is invoked when the dictionary engine **22** performs either a wide search or a deep search on one or more dictionaries (for example, at blocks **408, 414, 416,** and **422** of FIG. **15**). For the discussion that follows, FIG. 16 is described in the context of searching a single dictionary. However, it will be appreciated that the algorithm in FIG. **16** is performed on each active dictionary searched. At block **470** the dictionary engine **22** makes a record of the original preference value for the current node (i.e. the latest node in currentPath for the dictionary being searched). The dictionary engine **22** then finds at block **472** the two child nodes (if available) with the strongest preference values for the current node. These latter two nodes are also referred to as the two most preferred follower nodes. At block **474** an evaluation is made as to whether a chunk and end point is allowed for the current node. If the answer is "YES" then the dictionary engine **22** evaluates at block **476** whether the chunk is stronger in terms of preference value than either of the two follower nodes (i.e. either of the two children chosen at block **472**) or whether the chunk is a suffix. Note that if only one child node is available then this evaluation is performed only on the one available child node. If the chunk is stronger than the two follower nodes or the chunk is a suffix, then the chunk is retrieved at block **478** and stored as a search result in the search cache. If the search being performed using the algorithm **471** in FIG. **16** is a deep search, then at block **480** the dictionary engine **22** discounts (reduces) the influence of the chunk retrieved at block **478** if that chunk is also represented in a wide result set (if any) for the same dictionary. Further, if the chunk is a deep result (i.e. a result of a deep search) and it is the same as a wide result (i.e. a result of a wide search of the same dictionary), then at block **482** the corresponding wide result is "locked". When a wide result is locked, it preferably cannot be bumped out of the search result set later used to represent the up to five results retrieved from the dictionary concerned (when deep results and wide results are combined for each dictionary at block **424** in FIG. **15**). Also as a result of proceeding to block **478,** the dictionary engine **22** checks at block **484** whether the current search underway is a wide search. If not then at block **486** the influence of the retrieved completion candidate (in this case a chunk) is temporarily reduced by temporarily replacing the preference value of the chunk's node(s) with the preference value of the strongest follower node. If no follower node exists, then the chunk's influence is temporarily neutralized. Processing returns to the calling operation at block **506.**

If the evaluations at either block **474** or block **476** lead to block **490,** then the character associated with the current node is added to the search result. At this point, the search result is part of a potential completion candidate which is eventually to serve as a candidate within the search cache. At block **492** a recursive call is then made to algorithm **471.** With the recursive call at block **492** the dictionary engine **22** traverses down the branches for the strongest follower node in search of the most preferred completion candidate from the strongest follower node. Such recursive calls are made until processing within an invoked instance of algorithm **471** finds a node which serves as either a leaf or a chunk which has a preference value which is stronger than its two strongest follower nodes or which is a suffix as determined at blocks **474** and **476.** When this happens, processing proceeds to block **478** and eventually to block **506,** and the instance of algorithm **471** that has been invoked returns at **506** to its earlier instance and the recursive search through the branches unravels until another point in the candidate tree **21** is encountered which brings processing to block **492** in which case the dictionary engine **22** drills deeper into the candidate tree once again. Eventually, all of the recursive calls unravel and processing returns to the calling operation for the first instance of algorithm **471.**

Once a recursive call at block **492** is completed and unravels, processing proceeds to block **494.** At block **494** the dictionary engine **22** checks to see whether or not there is a second strongest node available for the current node. If the answer is "NO" then at block **496** the preference value of the current node is temporarily changed to the preference value of the one child node available. If the answer is "YES" then the dictionary engine **22** checks at block **498** to see whether or not the second strongest child node has become the strongest child node. If the answer is "YES" then the dictionary engine checks at block **500** to see whether or not there has been a sufficiently substantial drop in the preference value of the previously strongest child node to merit reducing the preference value of the current node. If the answer is "YES" then the preference value for the current node is temporarily reduced to the preference value of the second strongest child node at block **502.** If the answer to any of blocks **494, 498,** or **500** is "NO", then the character added at block **490** is removed from the search result at block **326.** Processing then proceeds to block **506** for the current instance of algorithm **471** and returns to its calling operation.

Referring to FIG. **15,** once processing leads to block **424,** the dictionary engine **22** combines the wide results set and the deep results set for each active dictionary searched. The wide results and the deep results for a search conducted on a dictionary are combined such that a deep result will replace a wide result if the deep result, after having its influence reduced, is still stronger than a wide result which has not been locked.

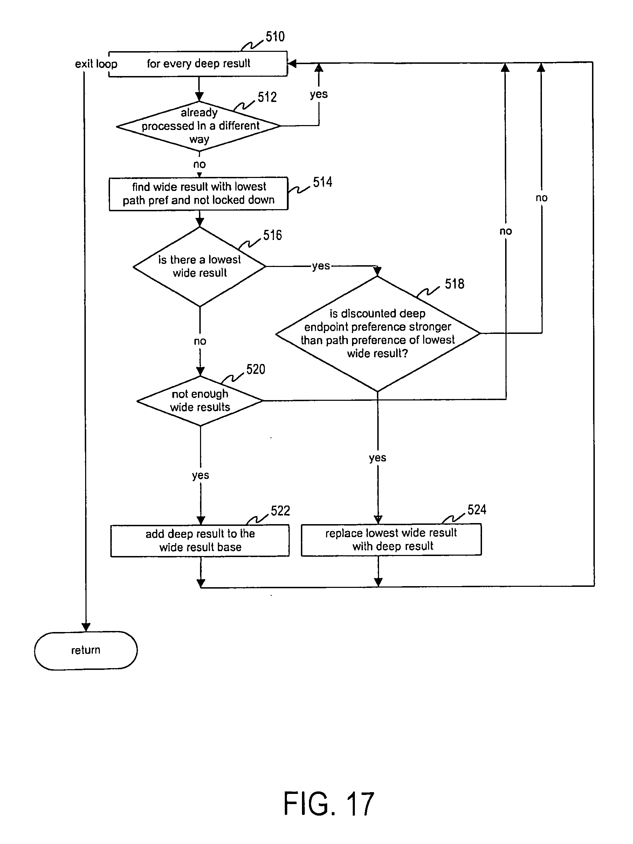

The operation of block **424** is illustrated further in FIG. **17.** Each deep result in a deep results set is processed using block **510.** A deep result is processed if at block **512** the dictionary engine **22** finds that that deep result has not already been processed in a different way. At block **514** the wide result with the lowest path preference (i.e. the lowest score) that is not locked is found at block **514.** If such a wide result is found at block **516,** then it is eligible to be replaced by a deep result in the deep results set. To determine if the wide result found is to be replaced, an evaluation is made at block **518.** At block **518** the end-point preference for the current deep result being analyzed is reduced (discounted) by a certain amount. In the first embodiment, this reduction is approximately 7%, although other higher or lower discount factors may be used. If the discounted end-point preference for the current deep result is stronger than the path preference of the lowest wide result, then the current deep result is used to replace that lowest wide result at block **524.** Processing then returns to block **510** to process the next available deep result.

If, at block **516,** an eligible lowest wide result is not found, then at block **520** the dictionary engine **22** checks to see if there are enough wide results in the wide results set (i.e. if the wide results set if full). If there are not enough wide results, then the current deep result is added to the wide result base (i.e. to the wide results set) before processing returns to block **510** to process the next available deep result from the deep results set.

Once the deep results from the deep results set for a dictionary are processed, processing returns to the calling operation. The algorithm in FIG. **17** is repeated for each pair of wide results set and deep results set obtained by the dictionary engine **22.**

Referring to FIG. **15,** if multiple dictionaries are active, then the N strongest results of each combined results set from block **424** are selected at block **426** to form a single results set. If the active dictionaries include both supplemental dictionaries and cascading dictionaries, then the combined results sets for the supplemental dictionaries are first used to produce the set of N strongest results. Once this is done, if additional slots remain for further candidates, then the combined results for the cascading dictionaries are processed in order of the cascading dictionary with the highest priority to the lowest priority, until all available slots in the single results set are filled or all results sets for cascading dictionaries are processed, whichever is earlier. (Supplemental dictionaries have the same priority as each other whereas a cascading dictionary is only consulted when a search of other active dictionaries with higher priority does not fill the search results.)

At block **428** the dictionary engine **22** preferably evaluates whether any of the results in the single results set provided from block **426** (or block **424** if only one dictionary is active) contains any completion candidates which have a predetermined root. If the answer is "YES", processing proceeds to block **430.** In the first embodiment, the predetermined root that is sought is a verb ending in "e" (i.e. an EVerb is possibly a root to at least one of the candidates in the results set), although in other cases other predetermined roots may be used. At block **430,** a wide search is performed on active dictionaries to see if any completion candidates are found which both have the same root as one of the existing candidates in the single results set, and if so, whether any such completion candidates with the same root end, for instance, with "e", "ed", "es" or "edly". If such completion candidates are found and empty slots are still available in the single results sets from block **426** (or block **424** if only one dictionary is active), then the empty slots are filled with such completion candidates by order of preference values at block **432** before processing proceeds to block **434.**

At block **434** an "overshoot" algorithm is preferably applied to the final results formed from the previous processing. This is done to determine if there are shorter chunks to any of the completion candidates in the final results which, if strong enough, should replace the longer completion candidate in the final results. The overshoot algorithm is used to prevent cases where a parent completion candidate has been overshot in preference to one of its children. For instance, where "government" has been retrieved instead of "govern...".

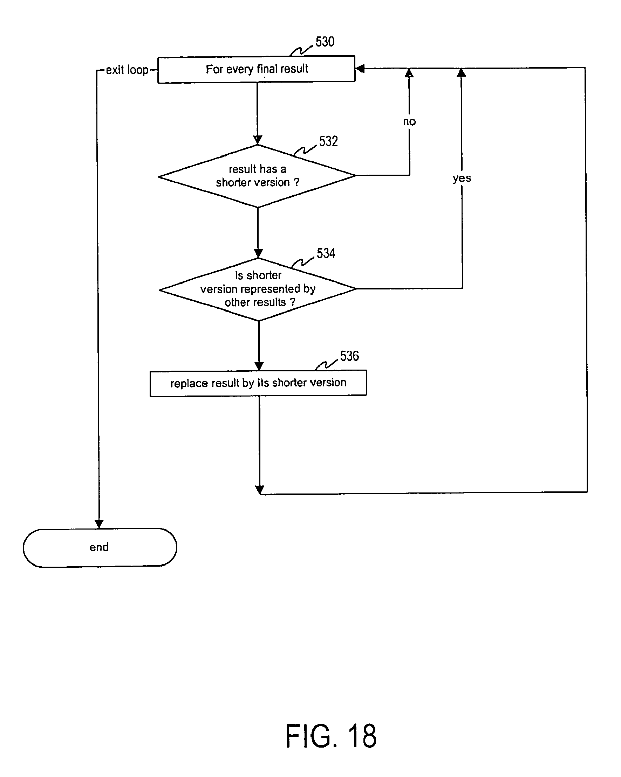

Referring to FIG. **18** the overshoot algorithm in block **434** of FIG. **15** is shown in further detail. Each result is processed at block **530.** At block **532** the dictionary engine **22** checks to see if a completion candidate that forms a final result has a shorter version (i.e. has a shorter chunk that is its root). If the answer is "NO", then the next final result is processed at block **530.** If the answer is "YES", then at block **534** the dictionary engine **22** applies a discount factor to the shorter chunk's preference value and compares it with the preference value of the final result under evaluation. If the discounted preference value of the shorter chunk is stronger than the preference value of the final result, then at block **536** the shorter chunk is used to replace the final result under evaluation. Otherwise, the next final result is processed at block **530.** In the first embodiment, the discount factor used is 70%, in other words the preference value of the shorter chunk is reduced by 70% before the analysis is made at block **534.** Other discount factors may be used, both higher and lower than 70%. Once all final results are processed in FIG. **18,** processing returns to FIG. **15.**

Referring to FIG. **15,** at block **436** clean up operations are carried out before the final results are displayed in the search list **30** on the user interface. For instance, chunk indications (i.e. "...") are appended to each chunk in the final results, upper casing (if on) is applied to the final results and the final results may be sorted. The final results are then returned at block **440** as the final set of search results for display in the search list **30.**

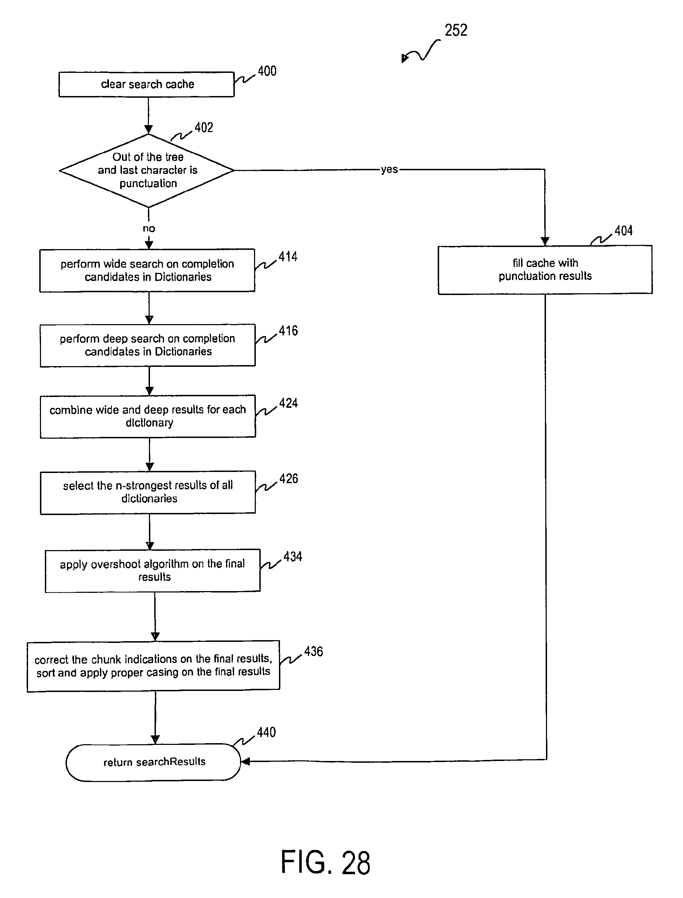

In referring to FIG. **15** it will be appreciated that features such as name spaces, predetermined roots (Everb), and the overshoot algorithm, while preferred for more robust solutions, are optional. In an alternative variation, by way of example, a more simplified implementation of block **252** is show in FIG. **28** which does not analyze name spaces or predetermined roots as shown in FIG. **15.** The remaining blocks shown in FIG **28** operate in substantially the same way as the corresponding blocks of FIG. **15** without the presence of name spaces or predetermined roots.

Referring to FIG. **2** and **9,** at block **120** the group of completion candidates retrieved as the search results from block **118** are displayed in a visual representation of the search list **30** alongside the digital keyboard **28a.**

In the first embodiment, once the user has pressed a desired key on the digital keyboard **28a** resulting in certain keys on the digital keyboard **28a** being highlighted and a set of completion candidates being displayed in the search list **30,** the user can perform several actions including the following:
(1) the user can lift the pointing device up (releasing the pressed key) and either continue adding to or modifying the current partial text entry using the digital keyboard **28a** or to carry out another operation; or
(2) the user can select and accept one of the completion candidates in the search list **30** as a completion to the current partial text entry, and begin a new partial text entry; or
(3) the user can pause with the desired key pressed for a predetermined amount of time sufficient to switch the data entry system **26** from the digital keyboard **28a** to the rapid navigation system **32;** or
(4) the user can select one of the completion candidates in the search list **30** by pausing on the completion candidate and can then use the selected completion candidate to initiate a further automated search to retrieve a more refined list of completion candidates from the dictionary **20** which are then displayed in the rapid navigation system **32.**

The action of releasing a pressed key to either continue adding to or modifying the current partial text entry is detected in the first embodiment when the pointing device is lifted up (the selected key is released) before the mode timer set at block **122** expires. When the pointing device is lifted up from a key on the digital keyboard **28a** before this mode timer expires, processing proceeds to block **106** where the mode timer is terminated. The data entry system **26** then checks the data entry mode at block **124.** In this particular example, the data entry mode is in character entry mode and the user has lifted up the pointing device to either continue adding to or modifying the current partial text entry. Therefore, processing will then proceed from block **124** to block **104** via blocks **125, 127, 114, 116, 118** and **120,** as discussed earlier in this specification. The data entry system **26** will then wait for further user input.

From the user's perspective, the user has typed a key and then released the key before the expiry of a certain amount of time (measured by the mode timer). The user has thus added the selected character on the key that was pressed to the end of the current partial text entry (which may have been empty before this action). The user can now add to or delete from the current partial text entry, so as to initiate the automated prediction and retrieval of completion candidates that begin with the modified partial text entry. The user can also call up the rapid navigation system **32** at any time by selecting a completion candidate in the search list **30** or pressing a key for at least a predetermined amount of time (measured by the mode timer).

With the digital keyboard **28a** displayed, the user can also issue a command to end a search for completion candidates based on a current partial text entry. This is done when a predefined key on the digital keyboard **28a** is selected which is associated with an end-of-search command, in which case processing proceeds to block **107.** For instance, as discussed earlier, when a user selects the space bar or period while constructing a partial text entry, the data entry system **26** is preferably programmed to terminate the search and to prepare for a new search of the dictionary **20** based on a new partial text entry. Other non-alphabetic characters may also be used to denote an implicit end-of-search instruction such as ending punctuation (a period, an exclamation mark, a question mark, etc). An express end-of-search button or key may also be displayed with the digital keyboard **28a** which does not serve the dual role of entering a character into a document. When the end-of-search button is selected by the user, the data entry system **26** is instructed to end the present search and to prepare for a new search. Processing then returns to block **104.**

Referring to FIG. **9,** the user can also issue other commands from the digital keyboard **28a.** Examples of commands that may be selected preferably include common word processing commands such as Enter, Backspace, Shift, CTRL (control key), and Delete (a character), and other commands such as change keyboard layout, and display an additional numerical or symbol keypad. In the first embodiment, these commands are selected by the user using predefined keys on the digital keyboard **28a** or using function buttons displayed along with the digital keyboard **28a,** and are processed at block **107.**

The action of selecting and accepting one of the completion candidates in the search list **30** as a completion to the current partial text entry, and beginning a new partial text entry, is detected when the pointing device is lifted up while a completion candidate is selected in the search list **30.** In this event, the data entry system **26** is programmed to recognize that the user has completed the current partial text entry and automatically initializes so that the next character selected from the digital keyboard **28a** will be treated as a leading character for a new partial text entry. In character entry mode, when a user selects a completion candidate from the search list **30** and lifts up before a chunk or mode timer expires, the selection and final acceptance of the completion candidate is processed through blocks **106, 124** and **125.** At block **125** the data entry system **26** recognizes that the selected completion candidate is to complete the current partial text entry and that a new search based on a new partial text entry is to begin. In this case, a space is preferably added at block **119** to the end of the accepted completion candidate when it is used to complete a search based on the current partial text entry. The data entry system **26** then prepares at block **137** for a new search to begin based on a new partial text entry. Processing proceeds to block **104** where the data entry system **26** waits for further user input.

The action of pausing with the desired key pressed for a predetermined amount of time sufficient to switch to the rapid navigation system **32** is detected by the data entry system **26** if the mode timer (set at block **122**) expires at block **134** while the desired key that the user has selected remains pressed. In this case, the mode timer is terminated at block **136,** and the data entry system **26** switches from character entry mode to rapid search mode at block **138.** Processing then proceeds to block **140** in FIG. **10.**

Referring to FIG. **2** and **10,** at blocks **140** to **144** the rapid navigation system **32** is displayed and replaces the display of the digital keyboard **28a.** At block **140** the current list of completion candidates in the search list **30** are drawn (displayed) on the user interface. At block **140** the visual representation of the navigational object **50** is also drawn (displayed) on the user interface near the list of completion candidates displayed. In the first embodiment, the navigational object **50** is displayed as a set of selection targets (as illustrated in FIG. **7** and **8).** At block **144** the back-up key **54** is also displayed on the user interface.

The data entry system **26** then waits for user input at block **146.** If the user input that is received at block **146** corresponds to a gesture with the pointing device, the data entry system **26** determines at block **148** whether the gesture is to a completion candidate in the search list **30** or the "back-up" key **54.**

If the gesture is to the "back-up" key **54** then processing proceeds to block **150** where the data entry system **26** restores the previous search list results before processing returns to block **140** and **144** where the display of the rapid navigation system **32** is updated.

If the gesture detected at block **146** and block **148** is to a particular completion candidate in the search list **30,** then the selection target corresponding with the particular completion candidate is highlighted at block **152.** At block **154,** a choice timer is set indicating that a completion candidate has been selected from the search list **30.** Processing then returns to block **146.**

Once the choice timer expires, as detected at block **154,** a green outline is drawn at block **156** in the selection target corresponding to the particular completion candidate identified as being selected as discussed above. At block **158** the data entry system **26** evaluates whether or not the particular completion candidate concerned is a "chunk". As will be recalled, chunks provide a way of organizing the display and retrieval of completion candidates. Chunks are shown in the search list **30** as completion candidates with a "..." following them (a chunk indication), indicating that the dictionary **20** contains one or more completion candidates that begin with the chunk (for example, see FIG. **7**). Completion candidates in the search list **30** that are chunks are identified as such during the retrieval process, for instance in block **118** (FIG. **9**).

At block **158,** if the particular completion candidate gestured to is found to be a chunk, then a chunk timer is set at block **166** and the data entry system **26** waits for further user input at block **146.** If a chunk displayed in the search list **30** remains selected until the chunk timer expires at block **168,** the chunk is written to the output window (user's document) at block **170** and is used to retrieve at block **172** a revised list of completion candidates for the search list **30,** each beginning with the chunk. Processing then returns to blocks **140** to **144** to redraw the search list **30,** the navigational object **50** and the "back-up" key **54,** and to wait for further user input at block **146.**

If a chunk in the search list **30** is selected by the user in rapid search mode, and the pointing device is lifted up from the selection before the chunk timer expires, then the chunk will be added to the text in the output window. Thus, by gesturing to a chunk and lifting the pointing device before the chunk timer expires, the user will add the chunk to the text or document in the output window without automatically initiating the display of a revised list of completion candidates that begin with the chunk. If a user selects with the pointing device a completion candidate in the search list **30** that is not a chunk, the user can continue to keep the completion candidate selected for as long as desired without automatically triggering a further search. This is because, in the first embodiment, a completion candidate that is not a chunk has no further completion candidates below it in the dictionary **20** to choose from.

If the data entry system **26** detects at block **146** that the pointing device has been lifted from a region of either the search list **30** or the rapid navigation system **32,** processing proceeds to block **106** (FIG. **9**) where the mode timer, the choice timer (if on) and the chunk timer (if on) are terminated. Processing then continues at block **124** where the data entry mode is evaluated to determine if the current data entry mode is character entry mode or rapid search mode. If, at block **124,** the data entry system **26** finds that the data entry mode is in rapid search mode, processing proceeds to block **126.** It will be recalled that at block **146** the data entry mode was in rapid search mode. At block **126** the data entry system **26** determines if a completion candidate has been selected. If the answer at block **126** is "YES", then the portion of the selected completion candidate that has not already been displayed in the text as the partial text entry, is added to the end of the partial text entry in the output window (i.e. in the user's document) at block **128.** If no completion candidate has been selected, block **128** is not processed. The data entry mode is switched to character entry mode at block **132,** the current search is terminated and the data entry system **26** prepares for a new search (block **131**) to begin based on a new partial text entry. At block **135** the image of the rapid navigation system **32** is cleared from the user interface and the digital keyboard **28a** is displayed. The data entry system **26** then waits for further user input at block **104.**

### Data Entry System Features

The data entry system **26** may include a variety of features and aspects to further enhance functionality and flexibility of text entry for the user. Furthermore, each of the following features and aspects individually provides a beneficial enhancement and is an embodiment of the present invention. These additional features and aspects of the present invention will now be described below. Many of the features and aspects described below can also be applied in combination with various types of search lists containing completion candidates, including single and multi-level search lists.

As before, the following features and aspects can be applied to many types of personal computing devices and may be stored as computer-readable instructions in one or more types of computer-readable media.

### Rapid Navigation System

Referring to FIG. **2** and **8,** the selection targets within the navigational object **50** are shown bordered in the first embodiment. Other configurations may also be used. For instance, the selection targets may be programmed to be non-bordered. In yet another variation, no graphical image of the navigational object **50** is drawn but the substantially upward and downward movements of the pointing device within (or in association with) a particular region of the user interface are monitored by the data entry system **26.**

In another aspect, the rapid navigation system **32** is programmed to have a certain level of "stickiness". In this variation, when the point device is lifted from the touch-sensitive screen, or an equivalent operation is carried out that results in the rapid navigation system **32** being deselected, a display timer is started and the visual components of the rapid navigation system **32** remain displayed until the display timer runs out. Once the display timer runs out, the rapid navigation system **32** is replaced with an image of the digital keyboard. On the other hand, if the pointing device comes into contact with the touch-sensitive screen (or reselects the rapid navigation system) before the display timer runs out, the rapid navigation system **32** continues to remain in operation and the display timer is terminated. This variation allows the user to activate the rapid navigation system **32** with the pointing device, and then release the pointing device from contact with the screen (or from an equivalent mode for selecting the rapid navigation system **32**) without the rapid navigation system **32** immediately being replaced with the digital keyboard **28a.** If the user wishes to call up the digital keyboard **28a** display immediately, then the user can select a predetermined command on the user interface. With this variation the user has the option of lifting the pointing device while taking some time to decide whether or not to keep the rapid navigation system **32** active, while still having the option to quickly clear the visual components of the rapid navigation system **32** and switching to the digital keyboard **28a.**

In the first embodiment, the rapid navigation system **32** provides a mechanism for rapidly navigating and selecting from completion candidates such as words, phrases, and character sequence for entry into a document. As a variation, this technique can be used to move rapidly through data of any type that can be ordered by importance or frequency including, for example, web-sites (links or URLs), databases, news sources, inventories, menus and the like.

### Displaying Completion Candidates

In the first embodiment, a list of completion candidates is displayed alongside the digital keyboard **28a.** In one variation, such lists may be displayed on either side of the digital keyboard **28a** or, if desired, in other locations on the user interface such as above, below or overlapping the digital keyboard **28a.** Displaying completion candidates to the left side of the digital keyboard **28a** for right-handed users, or on the right side for left-handed users, places the completion candidates in a location which can be reached with an easy and natural motion with one's fingers, while minimizing the need to make awkward wrist motions or to relocate one's hand.

### Tracking an Entered Phrase

In another variation, the data entry system **26** tracks the last N character sequences entered (where N is an integer). Typically, this means that the last N words entered are tracked, although the data entry system **26** allows for other types of character sequences to be entered and tracked as well. Each time a search is terminated and a new search initiated, the last character sequence entered is recorded. With this information recorded, the data entry system **26** is able to use multiple character sequences (such as a phrase) to locate phrases, names, addresses and the like stored in the dictionary **20.** In this variation, the current partial text entry (i.e. the current character sequence being entered) is used as the basis for searching for completion candidates in the dictionary **20,** however the last N character sequences entered are taken into account as well.

### Search List

In another variation, the data entry system **26** can retrieve additional potential completion candidates to fill in the search list **30** if the number of completion candidates retrieved is less than the display capacity for the search list **30.**

### Undo

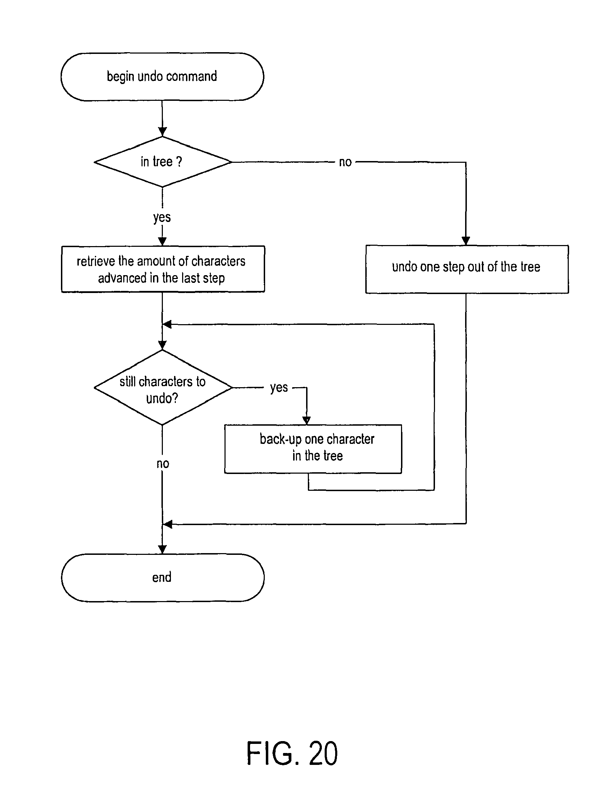

Referring to FIG. **20,** with the digital keyboard **28a** the user can also "undo" part of the current search already recorded. "Undo" command enables the user to undo the last entry made into the user's document with the data entry system **26** and to cancel the last leg of the search path used to search the dictionary **20** for potential completion candidates. When the "Undo" command is selected from the user interface, the last entry made to form the current partial text entry is cancelled. Accordingly, the part of the search path that was constructed with that last entry is cancelled. Thus, if the last entry made with the data entry system **26** was a single character through the use of the digital keyboard **28a,** then that character would be deleted from the current partial text entry and the search path would retreat up one node in the candidate tree **21.** If the last entry made with the data entry system **26** was the selection of a chunk or other completion candidate that was inserted into the user's document, then that chunk or other completion candidate (as the case may be) would be deleted from the current partial text entry and the search path would retreat up the candidate tree **21** until the nodes making up the chunk or other completion candidate no longer form part of the search path. The Undo command may be used repeatedly to cancel a group of the last entries made with the data entry system **26.**

### Learning Ability of the Dictionary

In one variation, the dictionary **20** is programmed to learn to adapt the rankings of completion candidates within the candidate tree **21** to the preferences of the user as the data entry system **26** is used over time. Dictionary **20** is also preferably programmed to learn new words and other character sequences entered by the user. As with the first embodiment, preference values are maintained on a character by character basis in each node of the candidate tree **21.** Each time a character is typed or a chunk is selected by the user from the search list **30** and entered into the text of a document, the preference values of the nodes involved are incremented. In addition to the increase in the preference values of the nodes involved, the preference values of the lowest neighbour (i.e. sibling node) of the nodes involved are decremented. As well, the decrease in preference value of neighbouring nodes (sibling nodes) is only performed for a certain range of the increase in preference values. In this way, a high frequency completion candidate will not flatten out all the preference values of neighbouring completion candidates.

With this variation, new completion candidates can be added to the candidate tree **21** at any time. If the user approves the creation of a new completion candidate, the following will take place in the dictionary **20:**
1) The dictionary engine **22** will find the portion of the desired completion candidate that already exists as a path in the candidate tree **21;**
2) The last node of the existing path in the candidate tree **21** is then extended with a pointer to a new node for a new character; and
3) Nodes for the remaining characters in the desired completion candidate are allocated and linked together to form a sequence of branches which complete the existing path of the candidate tree to form and result in the desired completion candidate.

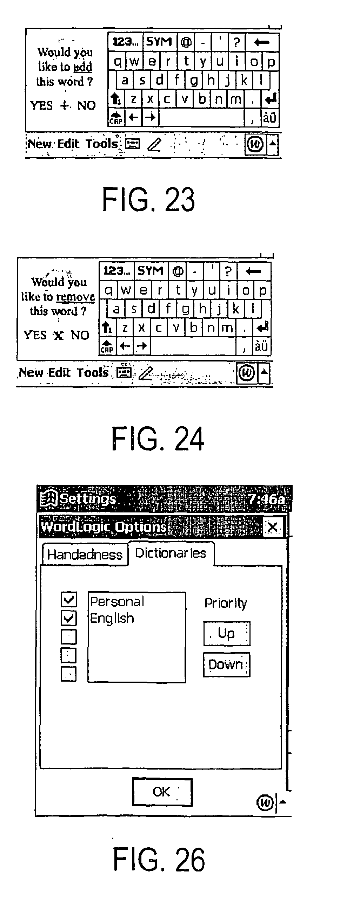

Examples of interfaces permitting a user to add or remove a completion candidate (such as a word) from the user's personal dictionary are illustrated in FIG. **23** and **24.** When a partial text entry entered by a user is not recognized by the data entry system **26** the user is presented with the option of adding that partial text entry into a personal dictionary, as illustrated in FIG. **23.** On the side of digital keyboard **28a** a question appears asking the user if they want to add the unrecognized word (completion candidate) to the user's personal dictionary. If the user answers "Yes" then the unrecognized word will be added to the personal dictionary. Candidates added to such a personal dictionary can be removed using the interface shown in FIG. **24.** For instance, if the user selects as a final result from the search list **30** a completion candidate which was previously added to the user's personal dictionary, the data entry system **26** will present the user with the option to delete the selection from the personal dictionary.

An example of multiple dictionaries being activated is shown in FIG. **26** in which a personal dictionary and an english dictionary have been activated for use with the data entry system **26.** The user can also adjust the priorities of the active dictionaries. By changing the priorities of the active dictionaries, the user can influence when completion candidates from particular dictionaries will appear in the search list **30.** For instance, if a French dictionary is given a higher priority than an English dictionary, then completion candidates from the French dictionary are more likely to appear more often in the search list **30** than completion candidates from the English dictionary. This is an example of a cascading set of dictionaries. A cascading dictionary is only consulted when a search of active dictionaries with higher priorities is not able to fill the search results.

### Descriptions for Completion Candidates

In another variation, the completion candidates stored in the dictionary **20** can be linked to descriptions which visually provide the user with descriptive information associated with a completion candidate. Descriptions can be used to make it easier to identify the completion candidate retrieved. This can be helpful when a completion candidate is in fact an abbreviation or acronym or a visually small item such as a period. A description can be linked to a completion candidate in many ways. For instance, a description may be linked to an end node of a completion candidate within a candidate tree. As another example, the completion candidate "btw" may have the description "by the way" associated with it in the dictionary.

In another alternative, nodes in the candidate tree **21** can include information about the types of completion candidates that they are associated with. For instance, a node in a set of nodes that make up the word "switch" may include information identifying the word switch as a noun and a verb.

### Compact Candidate Tree

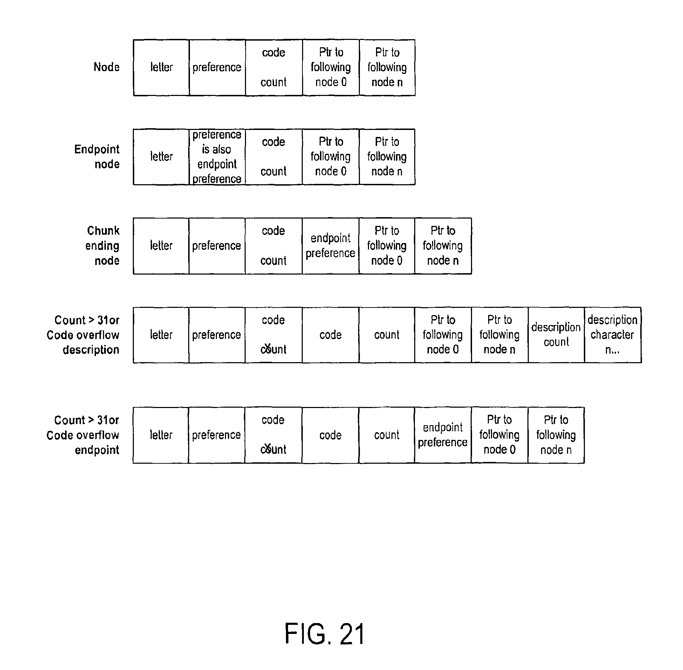

In another aspect of the present invention, a compacted candidate tree may be used to reduce the memory requirements for the dictionary **20.** This aspect can be desirable if available memory resources are limited or at a premium. With the compacted candidate tree, one can reduce the memory requirements for the majority of the nodes in the candidate tree **21** with the added benefit that updates or modifications to the dictionary **20** can be quickly synchronized between computing devices. The node structure for the compacted candidate tree is shown in FIG. **21.** As illustrated in FIG. **21,** a node in the compacted candidate tree will typically contain segments for storing a character, a preference value associated with the character, a code count, and pointers for pointing to the first and last child nodes associated with a node. If a node is meant to serve as an end point to a completion candidate, then the preference value stored in such an end point node will also serve as an end point preference value. If a node in the compacted candidate tree is meant to identify a chunk ending, then such a chunk ending node contains an additional field for storing an end point preference value. The end point preference value in this case is meant to identify the preference of the chunk relative to other completion candidates defined by descendants to the chunk node to complete. As also illustrated in FIG. **21,** nodes, including end point nodes and chunk ending nodes, contain a code and count field. The code and count field is used in one of the following situations:
1) If more coding bits are needed to describe the node concerned. This will arise in the case when the node concerned is shared amongst several completion candidates, has a description associated with it or indicates a list;
2) The number of descendant nodes to the node concerned exceeds a threshold number, which by way of example, is 31.

The "X" shown in the code and count part of the last two nodes in FIG. **21** indicate that the associated field has been struck out because it has been moved to another location in the respective node data structure. This is preferably done when the associated code and count field is a fixed size and would be overloaded above its maximum capacity. In this case, a new location is built and a relocation pointer (code) is constructed to point to a new location for the information.

The code part of the code and count field can be used to provide a variety of types of information. For instance, the code and count field can have the following values:
- 0x80: which indicates redirection, letter and preference contain offset to the new node.
- 0x40: which indicates code and count redirection, code and count each occupy a byte.
- 0x20: which indicates that the node is an endpoint.
- 0x10: which indicates that the node is shared.
- 0x08: which indicates that the node has a description.
- 0x04: which indicates that the node points to a list.
- 0x02: which indicates that the node is deleted.

### Object-side of Dictionary

In another aspect of the present invention, the dictionary **20** may be split into two sides. One side (a completion candidate side) containing all the completion candidates and another side (an object side) containing objects.

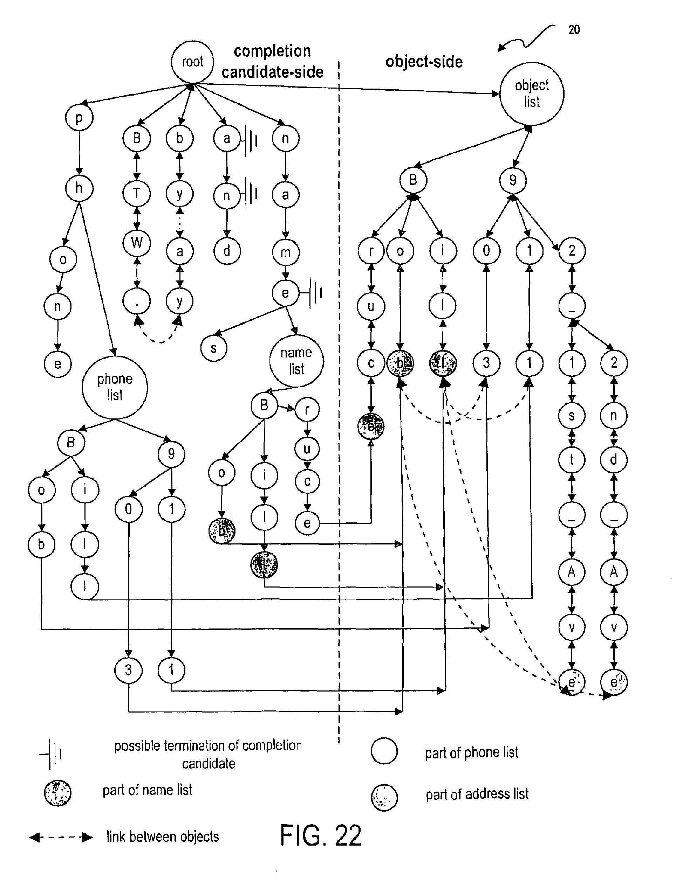

An example of such an arrangement is shown in FIG. **22.** The object-side of the dictionary **20** is meant to store objects such as names, addresses, phone numbers, and other information associated with the completion candidate. Completion candidates on the completion candidate side of the dictionary which have object information associated with them on the object-side of the dictionary **20** are linked together with their associated information on that object-side. For example, in FIG. **22,** "Bob" is a completion candidate which has associated with it the phone number "903" (simplified for illustration). The object-side of the dictionary **20** also contains address information for Bob identifying a street address of "92 2^{nd} Ave."

In this variation, when a completion candidate or partial text entry is entered that is associated on the object-side of the dictionary **20** with object information, an object indicator is lit on the user interface indicating to the user than an object is known within the dictionary **20** under the current completion candidate or partial text entry entered. Activating an object indicator on the user interface will then instruct the data entry system **26** to retrieve and display associated object information from the object side of the dictionary **20.**

### Sub-Lists

Completion candidates and their descriptions can be organized into sub-lists. A sub-list is used to describe a common feature of the completion candidate in that sub-list. For instance, a phone list may be included in the dictionary. The completion candidates "903" and "911" and their descriptions "Bob" and "Bill" are stored in the dictionary. Note that the roles may be reversed with completion candidates meaning "Bob" and "Bill" and their descriptions being "903" and "911" respectively. When a completion candidate is part of a sub-list on the completion candidate-side of the dictionary **(20),** the completion candidate and its description are also stored in the object-side of the dictionary where the connection between the completion candidate and the description is realized as illustrated in FIG. **22.**

The completion candidate and its description on the completion candidate-side of the dictionary **20** points to the object-side of the dictionary **20.** The completion candidate becomes part of the sub-list, in this case a phone list, and its description is available through that sub-list. For example, gesturing towards the completion candidate "903" will result in the data entry system 26 indicating that it is part of the phone list, while gesturing towards "Bob" will not indicate that it is part of the phone list. Instead, gesturing towards "Bob" will result in the data entry system **26** indicating that Bob is part of a name list.

A sub-list specification consists of a sub-list name and optionally its access sequence. The access sequence specifies how a particular list is to be accessed via the data entry system **26.** If no access sequence is specified, the completion candidates and their descriptions that form part of the list become part of the completion candidate-side of the dictionary. Completion candidates out of such a sub-list are then suggested (predicted) by the data entry system **(26)** as the user makes use of the digital keyboard **(28)** and the rapid navigation system **(32).**

If an access sequence is specified for a particular sub-list, then the completion candidates and their descriptions that form part of the sub-list are accessed by the user entering or selecting the access sequence. After the access sequence is entered or selected, the name of the sub-list concerned will show up as one of the predictions in the search list **(30).** Gesturing to the name of the sub-list provides the user with access to its completion candidates. For instance, gesturing towards "phone list" in a search list **30** provides the user with access to phone numbers and names within the phone list. Phone lists, name lists, and the like form their own sub-trees within the dictionary **20.** As a result, when such a sub-list, such as the phone list, is selected by the user, predictions are based on preference value or based on the contents of these sub-trees. Thus, when the phone sub-list is accessed, typing the letter "b" will result in the data entry system **26** making predictions from the sub-tree for the phone list.

### Tables

With the completion candidate-side and the object-side of the dictionary **20,** one can also construct tables which provide relationships between various sub-lists within the completion candidate-side of the dictionary **20** and objects on the object-side of the dictionary **20.** With tables tabular input information can be processed when constructing the dictionary **20.** If a table is to be processed as part of the completion candidate-side of the dictionary **20,** the table contents are stored on the completion candidate-side of the dictionary **20** as well as on the object-side of the dictionary **20.** If a table is to be processed as part of the object-side of the dictionary **20,** then it is only stored on the object-side of the dictionary **20.** An example of a table to be processed as part of the dictionary **20** is set out below.

| Name-list | Phone-list | Address-list |
|---|---|---|
| Bob | 903 | 92 1^{st} Ave |
| Bill | 911 | 92 2^{nd} Ave |

As can be seen the table shown identifies sub-lists that are to be incorporated within the dictionary **20.** In the examples shown, sub-lists are set out in columns with rows of the table containing particular members of the particular sub-list. As can be seen from FIG. **22,** the name list and phone list form part of the completion candidate-side of the dictionary and are thus linked also to the object-side of the dictionary. However, the address list was processed as only part of the object-side of the dictionary **20.** Thus, information can be stored on the object-side of the dictionary that can be accessed without triggering or interfering with character predictions or completion candidate predictions made using the completion candidate-side of the dictionary **20.**

Referring to FIG. **25,** in a preferred approach, preference values are normalised using buckets, with each bucket being associated with a particular preference value. A bucket is used to contain a certain number of completion candidates all having the same preference value. With this approach, N buckets are used (where N is an integer). Each bucket is assigned a unique preference value and has a predetermined capacity to store completion candidates. Buckets with high preference values are given a much smaller capacity to store completion candidates than buckets with low preference values. Thus, buckets with high preference values contain only a few completion candidates (or a single completion candidate), while completion candidates with low preference values are packed together in large or massive numbers within buckets with low preference values.

This approach with buckets provides a mechanism for easily distinguishing between completion candidates having high preference values. Completion candidates with low preference values are grouped together tightly. This is considered acceptable since the completion candidates in the dictionary **20** are organised by preference values (i.e. frequency values relative to each other) and, as a result, the user will tend to more often look to select completion candidates having high preference values as opposed to completion candidates with low preference values (i.e. low frequencies). Since there are more buckets for completion candidates having high preference values, the user will tend to receive more accurate suggestions for completion candidates in the search list **30.** When a user is looking for a more rare completion candidate (i.e. completion candidates with low preference values relative to other completion candidates in the dictionary **20**) then the list of completion candidates suggested will not be as accurate, although the reduced accuracy of predictions in this case will not be as important since rare completion candidates, by their nature, are less likely to be sought by the user. As well, as more characters are added to the end of the partial text entry, the number of possible completion candidates associated with the partial text entry decreases rapidly, therefor the preference values become less important.

In the first embodiment, the data entry system **26** is application independent and communicates with applications via an API. In an alternative embodiment, the data entry system **26** may be embedded in an application.

It will be further appreciated that many of the aspects of the present invention may be applied to several types of soft or digital keyboards and keyboard layouts, including traditional keyboard layouts, and rectangular keyboard layouts. It will also be appreciated that the digital keyboard may contain other symbols that could encode a language.

### Character Entry System

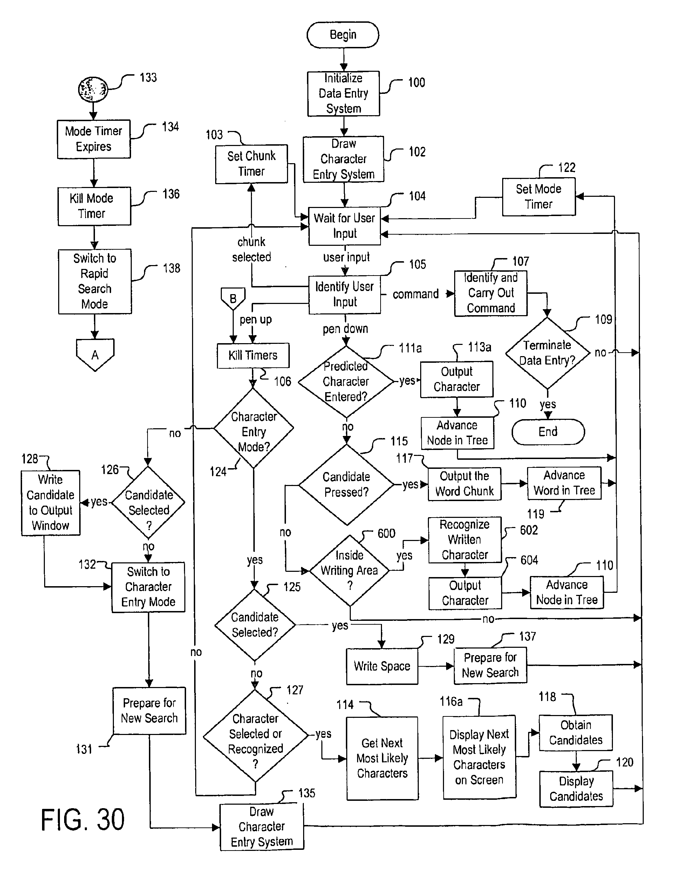

Referring to FIG. **29** and **30,** there is shown another embodiment of the present invention wherein the character entry system **28** (FIG. **2**) is implemented as a script-based recognition system **28b** such as Jot^{™} or Palm's Graffiti^{™} or as a hand-writing recognition system. Combining the script-based recognition system or the hand-writing recognition system with the capability of the data entry system **26** to search for and retrieve potential completion candidates, the user can enter desired characters from the character entry system **28** without having to change keyboard displays in search of a desired character or symbol.

In the embodiment illustrated in FIG. **29** and **30,** user input received via an input pad, tablet, touch screen or the like is interpreted by the character entry system **28** (script-based recognition system **28b**) to identify character entries and user commands based on the scripting language recognized by the character entry system **28.** The embodiment illustrated in FIG. **29** and **30** operates in substantially the same manner as the first embodiment described earlier above (see FIG. **2, 3** and **9**), with the modifications which follow. First, as will be seen from FIG. **30,** the data entry system **26** has been modified to operate with the script-based recognition system **28b** (or a hand-writing recognition system) rather than the digital keyboard **28a.** Character entries from the character entry system **28** are handled by blocks **600, 602** and **604.**

If the pointing device is pressed down in the writing area for the script-based recognition system **28b** then processing will proceed from block **105** in FIG. **30** to block **600.** At block **600** the data entry system **26** evaluates whether the user input is associated with the writing area of the script-based recognition system **28b.** If the answer is "YES", then processing proceeds to block **602** where the character entry is identified and then written to the output window on the user interface at block **604.** The identified character is then used to delineate a search path within the dictionary **20.** As with the first embodiment, this is done at block **110** by advancing a node within the candidate tree **21** in search of potential completion candidates. Thus, blocks **600, 602** and **604** provide a substitute to the mechanism for character identification performed by blocks **111** and **113** in FIG. **9.**

In the embodiment shown in FIG. **29** and **30,** the data entry system **26** also preferably provides a predicted character list **28c** which displays, when available, the predicted set of next possible characters. As will be recalled, the predicted set of next possible characters represents a set (or list) of possible characters that a user is likely to next select from in order to further build upon an existing partial text entry. The predicted character list **28c** serves as a quick list of predicted characters that the user is likely to choose from next for the existing partial text entry. The predicted character list **28c** is generated and displayed on the user interface at block **116a** once the predicted set of next possible characters are obtained at block **114.** Characters displayed in the predicted character list **28c** can be selected by the user as part of the construction of the existing partial text entry. In FIG. **30** block **111a** is used to recognize when the user has selected a character from the predicted character list **28c.** When this occurs, processing proceeds to block **113a** where the selected character is written to the output window on the user interface and used to delineate a search path within the dictionary **20** in much the same way as a character chosen from the digital keyboard **28a** (FIG. **9**) would be used to delineate a search path. The predicted character list **28c** provides the user with an intelligent interface which the user may optionally use to enhance the character entry capabilities of the character entry system **28.** Using the predicted character list **28c** in combination with the script-based recognition system **28b** (or a hand-writing recognition system) provides the user with the flexibility of script-based writing (or hand-writing) and the accuracy and predictive ability of choosing from a predicted set of possible characters. The user can continue to construct the partial text entry using the script-based recognition system **28b** or may at any time select a character from the predicted character list **28c.**

With the script-based recognition system **28b** the user can enter characters in one of several ways. Initially, the user can enter characters using the scripting language recognized by the script-based recognition system **28b.** Once a character has been entered with the scripting language, the data entry system **26** is programmed to obtain and display a set of potential completion candidates in search list **30.** The data entry system **26** is also programmed to obtain and a predicted set of next possible characters in the predicted character list **28c.** With the search list **30** and the predicted character list **28c** displayed, the user can then continue to build the partial text entry using the scripting language recognized by the script-based recognition system **28b,** selecting a completion candidate from the search list **30** or selecting a predicted character from the predicted character list **28c.** As with the first embodiment first described above, the user can also activate the rapid navigation system **32** (see FIG. **2, 7** and **8**) to rapidly navigate through and select from a refined list of potential completion candidates. The rapid navigation system **32** cooperates with the script-based recognition system **28b** (or a hand-writing recognition system) in substantially the same way as with the digital keyboard **28a** in the first embodiment (see FIG. **2, 7** and **8**). When the search list **30** is displayed with the script-based recognition system **28b,** selecting and holding a completion candidate from the search list **30,** activates the rapid navigation system **32** which is preferably displayed in place of the script-based recognition system **28b.** The user can also activate the rapid navigation system **32** by entering a character using the script-based recognition system **28b** and keeping a portion of the writing area of the script-based recognition system **28b** selected until the mode timer switches the data entry mode to rapid search mode. The rapid navigation system **32** can also be activated by selecting a character from the predicted character list **28c** until the mode timer switches the data entry mode to rapid search mode, in substantially the same way as selecting a character from the digital keyboard **28a** in the first embodiment (FIG. **3**) will activate the rapid navigation system **32** (see FIG. **2, 7** and **8**). The script-based recognition system **28b** can also include an express key which, if pressed, activates the rapid navigation system **32.** Alternatively, the script-based recognition system **28b** can be programmed to have a particular script signal generated by the pointing device associated with activating the rapid navigation system **32.**

In a further variation, the character entry system **28** is programmed to interchangeably provide the user with a digital keyboard **(28a),** a script-based recognition system **(28b),** or a hand-writing recognition system. In this variation, the user can switch between different character entry systems and use each of them in combination with the other features of the present invention such as the rapid navigation system **(32)** and the display of the predicted set of next possible characters. In this way, a multi-modal character entry system that cooperates with the predictive features of the data entry system **26** provides the user with greater flexibility when entering text with a personal computing device.

In another variation, the data entry system **26** (FIG. **2**) has a character entry system **28** which operates as a multi-modal system programmed to support data entry using a digital keyboard **(28a)** and a voice recognition system. The voice recognition system can be one of the several voice recognition systems known in the art, adapted to interface with the character entry system **28.** In this variation, the user can enter characters (or character strings such as words and phrases) using either the digital keyboard or the voice recognition system. The user can also switch between the digital keyboard and the voice recognition system while entering data. This variation is also programmed to provide the earlier described predictive features including the rapid navigation system **(32).**

As the user constructs a partial text entry using the digital keyboard, the voice recognition system or the digital keyboard and the voice recognition system in combination, the data entry system 26 obtains and displays potential completion candidates in a search list (30). The data entry system 26 also preferably obtains and displays a predicted set of next possible characters, as illustrated in the first embodiment above. The multi-modal character entry system can also be programmed to support data entry using a script-based recognition system or a hand-writing recognition system.

Although this invention has been described with reference to illustrative and preferred embodiments of carrying out the invention, this description is not to be construed in a limiting sense. Various modifications of form, arrangement of parts, steps, details and order of operations of the embodiments illustrated, as well as other embodiments of the invention, will be apparent to persons skilled in the art upon reference to this description. For example, in the first embodiment, the dictionary is structured as a B-tree. However, other types of structures may be used to implement the dictionary such as a graph structure, a graph tree, a link list, and sequential lists. It is therefore contemplated that the appended claims will cover such modifications and embodiments as fall within the true scope of the invention.

## Claims

1. A computer-implemented method of entering data into a personal computing device (10) through a user interface (14) operable to display a character entry system (28) to facilitate user entry, with a pointing device, of a set of one or more characters making up a partial text entry, the method **characterized by**:
predicting a set of possible characters that a user is likely to enter next based on the set of one or more characters making up the partial text entry;
for each predicted character in the predicted set of possible characters, retrieving thematic information associated with the predicted character, the thematic information representing at least one characteristic of a prediction outcome associated with selecting the predicted character; and
displaying, for user selection, the predicted set of possible characters in a distinctive manner in relation to the character entry system (28), wherein predicted characters associated with thematic information satisfying a first criterion are also displayed in a distinctive manner in relation to predicted characters associated with thematic information not satisfying the first criterion.

2. The method of claim 1 wherein the character entry system (28) includes a digital keyboard (28a) and the predicted set of possible characters are displayed on the digital keyboard (28a) in a distinctive manner relative to other characters displayed on the digital keyboard (28a).

3. The method of any one of Claims 1 to 2 wherein the thematic information associated with a particular character represents a total number of potential completion candidates that are available if the particular character is added to the partial text entry.

4. The method of Claim 3 wherein the first criterion comprises whether the total number of potential completion candidates that are available if the particular character is added to the partial text entry, exceeds a predefined number.

5. The method of Claim 4 wherein the predefined number represents a display capacity of a search list (30) for displaying completion candidates.

6. The method of any one of Claims 1 or 2 wherein the thematic information associated with a particular character represents a depth of search results available if the particular character is added to the partial text entry.

7. The method of claim 6 wherein the first criterion comprises that the depth of search results available, if the particular character is added to the partial text entry, is within a predefined range of possible depths.

8. The method of any one of Claims 1 to 7 further **characterized by** displaying characters associated with thematic information satisfying a second criterion, in a distinctive manner in relation to characters associated with thematic information not satisfying the second criterion.

9. The method of any one of Claims 1 to 8 wherein the character entry system (28) is selected from the group consisting of a script-based recognition system (28b) and a handwriting recognition system.

10. The method of any one of Claims 1 to 9 further **characterized by**:
displaying a first character corresponding to the predicted set of possible characters in a first distinctive manner if the thematic information associated with the first character is of a first type of information; and
displaying a second character corresponding to the predicted set of possible characters in a second distinctive manner if the thematic information associated with the second character is of a second type of information.

11. The method of any one of Claims 1 to 10 further **characterized by**:
determining a number of completion candidates available for each combination of the partial text entry and a character from the predicted set of possible characters;
displaying a first character from the predicted set of possible characters in a first distinctive manner on the user interface (14) if the number of completion candidates associated with that first character is equal to or greater than a first threshold number; and
displaying a second character from the predicted set of possible characters in a second distinctive manner on the user interface (14) if the number of completion candidates associated with that second character is less than a second threshold number.

12. The method of any one of Claims 1 to 11 further **characterized by**:
monitoring the user interface (14) for user input;
in response to receiving user input indicating selection of a character, obtaining a set of completion candidates associated with the selected character;
displaying, for user selection, the set of completion candidates; and
in response to selection of a completion candidate from the set of completion candidates, causing the selected completion candidate to be inserted into a document.

13. The method of any one of Claims 1 to 12 wherein displaying in a distinct manner comprises distinguishing a displayed character from other characters by distinct colour, shading, italics, bolding, and/or underlining.

14. The method of any one of Claims 1 to 13 further **characterized by** displaying a navigational object comprising a plurality of selection targets arranged in an arc-like manner, wherein each of the selection targets corresponds to a respective one of the completion candidates associated with the partial text entry.

15. The method of any one of Claims 1 to 14 further **characterized by**:
facilitating user selection of a completion candidate from a plurality of displayed completion candidates;
in response to a first type of user input, causing the selected completion candidate to be entered into an electronic document; and
in response to a second type of user input, obtaining a refined set of completion candidates based on the selected completion candidate.

16. The method of Claim 15 further **characterized by**, in response to a third type of user input, obtaining a previous set of completion candidates from which a present refined set of completion candidates was obtained in response to the second type of user input.

17. The method of any one of Claims 1 to 16 further **characterized by**, in response to user input during character entry, switching the character entry system (28) between any two or more of the group consisting of a digital keyboard (28a), a script-based recognition system (28b), a handwriting recognition system, and a voice-recognition system.

18. A computer-implemented method of entering data for display on a user interface, the method comprising:
displaying a character entry system on the user interface;
receiving a set of one or more characters making up a partial text entry selected via the user interface with a pointing device;
predicting a set of possible characters that a user is likely to next select from based on the set of one or more characters making up the partial text entry; and
displaying, for user selection, the set of possible characters in a distinctive manner in relation to the character entry system.

19. A computer-readable medium having stored instructions for use in the execution of the method of any one of Claims 1 to 18.

20. A system for computer-assisted data entry into a personal computing device (10) through a user interface (14) operable to display a character entry system (28) to facilitate user entry, with a pointing device, of a set of one or more characters making up a partial text entry, the system **characterized by**
means for carrying out the steps of the method of any one of Claims 1 to 18.
